(19) Europäisches Patentamt
European Patent Office
Office européen des brevets

(11) **EP 0 712 071 B1**

(12) **FASCICULE DE BREVET EUROPEEN**

(45) Date de publication et mention
de la délivrance du brevet:
**16.12.1998 Bulletin 1998/51**

(51) Int Cl.[6]: **G06F 7/72**

(21) Numéro de dépôt: **95470038.1**

(22) Date de dépôt: **26.10.1995**

(54) **Procédé de mise en oeuvre de multiplication modulaire selon la méthode de montgomery**

Verfahren zur Verwendung der modularen Multiplikation nach der Montgomery-Methode

Process for implementing modular multiplication according to the Montgomery method

(84) Etats contractants désignés:
**DE FR GB IT**

(30) Priorité: **08.11.1994 FR 9413594**

(43) Date de publication de la demande:
**15.05.1996 Bulletin 1996/20**

(73) Titulaire: **SGS-THOMSON MICROELECTRONICS S.A.**
**94250 Gentilly (FR)**

(72) Inventeur: **Monier, Guy, c/o Cabinet Ballot Schmit**
**F-57000 Metz (FR)**

(74) Mandataire: **Schmit, Christian Norbert Marie**
**Cabinet Ballot-Schmit,**
**18 Place du Forum**
**57000 Metz (FR)**

(56) Documents cités:
**EP-A- 0 566 498**     **EP-A- 0 601 907**

- **ALGEBRAIC CODING. FIRST FRENCH-ISRAELI WORKSHOP PROCEEDINGS, FIRST FRENCH-ISRAELI WORKSHOP. ALGEBRAIC CODING, PARIS, FRANCE, 19-21 JULY 1993, ISBN 3-540-57843-9, 1994, BERLIN, GERMANY, SPRINGER-VERLAG, GERMANY, pages 75-81, NACCACHE D ET AL 'Montgomery-suitable cryptosystems'**
- **ADVANCES IN CRYPTOLOGY - AUSCRYPT '92. WORKSHOP ON THE THEORY AND APPLICATION OF CRYPTOGRAPHIC TECHNIQUES PROCEEDINGS, GOLD COAST, QLD., AUSTRALIA, 13-16 DEC. 1992, ISBN 3-540-57220-1, 1993, BERLIN, GERMANY, SPRINGER-VERLAG, GERMANY, pages 505-516, SAUERBREY J 'A modular exponentiation unit based on systolic arrays'**
- **ADVANCES IN CRYPTOLOGY - EUROCRYPT '90. WORKSHOP ON THE THEORY AND APPLICATION OF CRYPTOGRAPHIC TECHNIQUES PROCEEDINGS, AARHUS, DENMARK, 21-24 MAY 1990, ISBN 3-540-53587-X, 1991, BERLIN, GERMANY, SPRINGER-VERLAG, GERMANY, pages 230-244, DUSSE S R ET AL 'A cryptographic library for the Motorola DSP56000'**

**Description**

L'invention concerne un procédé de mise en oeuvre de multiplication modulaire selon la méthode de Montgomery. Cette méthode permet d'effectuer des calculs modulaires dans un corps fini $GF(2^n)$ (corps de Gallois) sans effectuer de divisions.

Classiquement, les opérations modulaires sur $GF(2^n)$ sont utilisées en cryptographie pour des applications telles que l'authentification de messages, l'identification d'un utilisateur et l'échange de clés. De tels exemples d'applications sont décrits par exemple dans la demande de brevet français publiée sous le numéro 2 679 054.

On trouve dans le commerce des circuits intégrés dédiés à de telles applications, par exemple le produit fabriqué par SGS-THOMSON MICROELECTRONICS S.A. et référencé ST16CF54, bâti autour d'une association de type unité centrale - coprocesseur arithmétique, et dédié à la mise en oeuvre de calculs modulaires. Le coprocesseur utilisé permet de traiter des multiplications modulaires, en utilisant la méthode de Montgomery. Il fait l'objet d'une demande de brevet européen, publiée sous la référence 0 601 907 A2, et est illustré figure 1 (cette figure correspondant à la figure 2 de la demande de brevet européen citée).

L'opération de base, dite $P_{field}$, consiste, à partir de trois données binaires, A (multiplicande), B (multiplieur inférieur à N) et N (modulo), codées sur un nombre entier n de bits, à produire une donnée binaire notée P(A, B)$_N$ codée sur n bits, telle que $P(A, B)_N = A * B * I \bmod N$, avec $I = 2^{-n} \bmod N$. Pour cela, on considère que les données sont codées sur m mots de k bits, avec $m * k = n$, et on fournit les mots de A et B à un circuit de multiplication ayant une entrée série, une entrée parallèle et une sortie série.

Dans le coprocesseur décrit dans la demande de brevet européen citée, on a $k = 32$ et $m = 8$ ou 16.

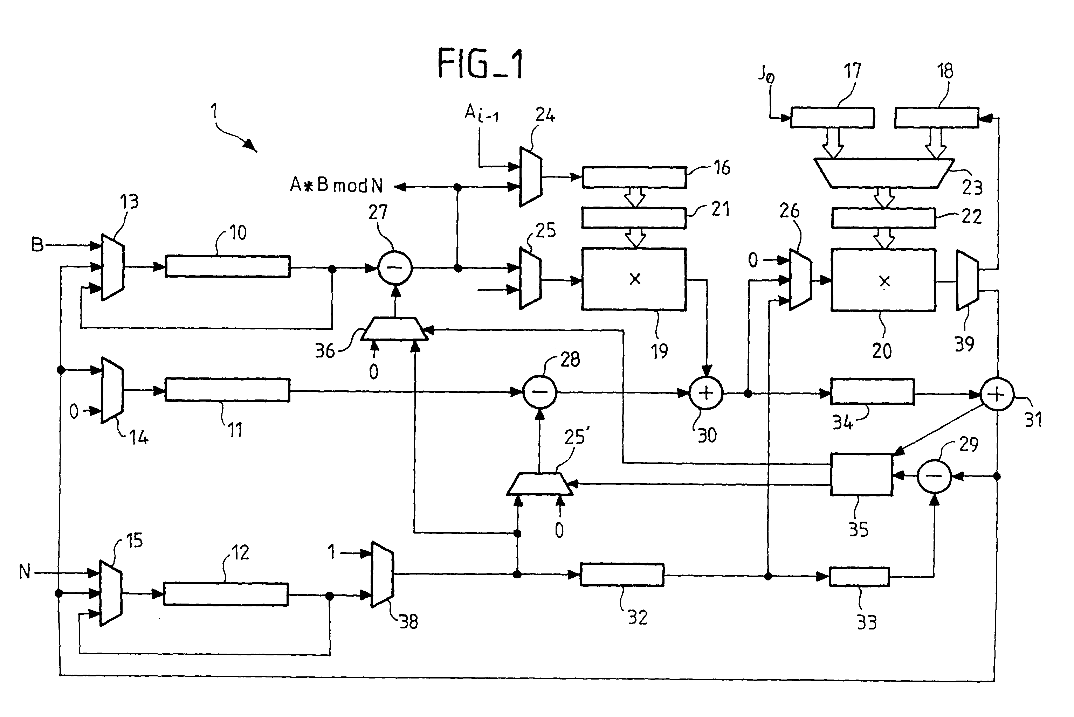

Dans cette optique, on met en oeuvre à l'aide du circuit illustré figure 1 un procédé comportant les étapes suivantes :

1. calcul d'un paramètre H ($H = 2^{2*n} \bmod N$) et d'un paramètre $J_0$ codé sur k bits, avec $J_0 = - N_0^{-1} \bmod 2^k$, $N_0$ étant le mot de poids le plus faible du modulo N, et stockage de $J_0$ dans un registre 17 de k bits,

2. chargement du multiplieur B et du modulo N dans des registres respectifs 10 et 12 de n bits, avec $n = m * k$, et initialisation d'un registre 11 de n bits à zéro, le contenu de ce registre étant noté S, avec S donnée variable binaire codée sur n bits,

3. mise en oeuvre d'une boucle, indicée par i, avec i variant de 1 à m, chaque $i^{ème}$ itération comprenant les opérations suivantes :

a) transfert du $i^{ème}$ mot $A_{i-1}$ du multiplicande A d'un registre 16 vers une bascule de mémorisation 21,

b) production d'une valeur $X(i) S(i-1) + B * A_{i-1}$ avec $S(0) = 0$ et $S(i-1)$ la valeur dite actualisée de S, définie ci-après, en :

I - décalant à droite le contenu du registre 10 vers l'entrée d'un premier circuit de multiplication 19 série-parallèle, avec rebouclage de la sortie du registre 10 sur son entrée,
II - multipliant les bits de B par $A_{i-1}$,
III - décalant à droite le contenu du registre 12, avec rebouclage de la sortie sur l'entrée,
IV - déterminant la valeur actualisée de S (i-1) comme étant la valeur stockée dans le registre 11 après la $(i-1)^{ème}$ itération, si celle ci est inférieure à N, et si elle est plus grande, en soustrayant en série N de celle-ci dans un premier circuit de soustraction série 28, la valeur en résultant étant la valeur actualisée de S(i-1), et
V - décalant à droite le contenu du registre 11 et additionnant bit à bit la valeur de la multiplication $B * A_{i-1}$ avec la valeur actualisée de S(i-1) dans un premier circuit d'addition série 30;

c) multiplication du mot le moins significatif de X(i), $X_0$ (1), par $J_0$, dans un deuxième circuit de multiplication 20 série-parallèle, et entrée de la valeur $X_0 (i) * J_0 \bmod 2^k = Y_0 (i)$ dans un registre 18, et simultanément retarder N et X(i) de k cycles dans des circuits de retard 32 et 34;

d) calcul d'une valeur $Z(i) = X(i) + Y_0(i) * N$ en :

I - multipliant $Y_0(i)$ par N, retardé de k cycles, dans le deuxième circuit de multiplication 20, et
II - additionnant X(i) à la valeur $Y_0(i) * N$ dans un second circuit d'addition série 31,

e) ne pas prendre en compte le mot le moins significatif de Z(i) et stocker les mots restants, c'est à dire $Z(i)/2^k$, dans le registre 11,

f) comparer $Z(i)/2^k$ à N, bit à bit, dans le but de déterminer la valeur actualisée S(i) de l'itération suivante, de la manière décrite ci-dessus, cette comparaison se faisant en soustrayant bit à bit $Z(i)/2^k$ et N dans un deuxième circuit de soustraction série 29, N ayant été retardé de k cycles supplémentaires,

g) le $i^{ème}$ mot du multiplicande A étant chargé dans le registre 16 à un instant quelconque pendant les opérations ci-dessus;

4. à la $m^{ème}$ itération, ignorer le mot le moins significatif de Z(m) et entrer les mots restants, c'est à dire $Z(m)/2^k$, dans le registre 10,

5. répéter les étapes 3 et 4, dans lesquelles on substitue $Z(m)/2^k$ à B et H à A, et on fournit $Z(m)/2^k$ ou $(Z(m)/2^k) - N$, par le biais d'un troisième circuit de soustraction série 27, au circuit de multiplication 19 (si $Z(m)/2^k \geq N$),

6. sortie du résultat stocké dans le registre 10 à la dernière itération, éventuellement soustrait de N si nécessaire.

Globalement, en appelant temps de cycle, ou cycle, la période du signal d'horloge synchronisant le fonctionnement du circuit de la figure 1, le temps nécessaire au traitement d'une multiplication modulaire peut de décomposer principalement en :

- $n * (n + 1)$ temps de cycle pour le calcul de H,
- n temps de cycle pour l'étape 2,
- $m * (n + 2 * k + x)$ temps de cycle pour les étapes 3 et 4 réunies d'une part, et pour l'étape 5 d'autre part, avec x un entier,
- n temps de cycle pour l'étape 6.

En pratique, x est fonction de l'initialisation du circuit, c'est à dire principalement de l'établissement de signaux de commande (de multiplexeurs par exemple) pour assurer un fonctionnement cohérent du circuit. En pratique on pourra considérer par exemple que $x = 7$.

En ce qui concerne la première étape, le calcul du paramètre $J_0$ est réalisé par l'unité centrale (méthode logicielle).

On peut montrer que H est fonction de la taille du registre 16, et du nombre de fois où ce registre est utilisé dans une boucle. On a $H = 2^{2*n} \bmod N$. Ce paramètre est un paramètre de correction d'erreur. En effet, l'étape 4 produit un résultat de la forme $A * B * I$, avec $I = 2^{-n} \bmod N$. On a $H * I^2 = 1 \bmod N$, ce qui permet de fournir un résultat exact, c'est à dire égal au résultat de la multiplication modulaire $A * B \bmod N$, lors de l'étape 5 du procédé de multiplication modulaire décrit ci-dessus.

Par ailleurs, la production de H est réalisé à l'aide du coprocesseur, selon la méthode suivante, à lire concurremment à la figure 2, cette figure 2 correspondant à la figure 9 de la demande de brevet européen citée.

Pour produire H, on opère de la manière suivante (voir également description pages 20, ligne 47 à page 25, ligne 52 de la demande de brevet européen citée) :

1. chargement de N dans le registre 12, et initialisation du registre 10 à $B(0) = 0$,
2. simultanément :

- décalage à droite et soustraction bit à bit de $B(0)$ et N dans un soustracteur série 27, avec décalage de une unité du résultat $R(0) = B(0) - N \bmod 2^n$, le décalage se faisant dans le soustracteur en sortant un premier bit à 0,
- chargement de $B(1) = 2 * R(0)$ dans le registre 10,
- soustraction bit à bit de $2 * R(0)$ et N pour déterminer si $2 * R(0)$ est $\geq$ ou $<$ à N, cette soustraction se faisant dans un deuxième soustracteur 40, avec test dans un circuit 44 du résultat de la soustraction,

3. mise en oeuvre d'une boucle indicée par un indice i, avec i de 1 à n, chaque itération comprenant les opérations suivantes :

- si $B(i) < N$ alors chargement de $B(i+1) = 2 * (B(i) - 0)$ dans le registre 10,
- sinon chargement de $B(i+1) = 2 * (B(i) - N)$ dans le registre 10.

On a $B(n+1) = H = 2^{2*n} \bmod N$.

L'inventeur a cherché à améliorer la mise en oeuvre de la multiplication modulaire par le coprocesseur illustré figure 1 afin d'une part de diminuer le temps nécessaire au déroulement de celle-ci pour des tailles de données identiques, et d'autre part d'étendre les possibilités de calcul du circuit.

Ainsi, l'invention propose un procédé de mise en oeuvre de multiplication modulaire selon la méthode de Montgomery, dans lequel un multiplicande A et un multiplieur B sont codés sur respectivement a et b mots de k bits, les mots de poids le plus fort de A et B étant non nuls, un modulo N est codé sur m mots de k bits, le modulo ayant $(m - m')$ mots de poids les plus forts de k bits nuls, avec $0 < m' \leq m$, comprenant des étapes de multiplication dans un circuit de multiplication ayant une entrée série pour recevoir des données codées sur au moins m' mots de k bits, une entrée parallèle pour recevoir des mots codés de k bits, et une sortie série, caractérisé en ce qu'on fournit successivement, lors de la mise en oeuvre de la multiplication, un nombre prédéterminé p de mots à l'entrée parallèle du circuit de multiplication, p étant indépendant de m et supérieur ou égal au nombre a.

Dans le circuit existant, on utilise un codage des données (multiplicande, multiplieur, et modulo) de type figé, c'est à dire indépendant des valeurs de celles-ci. En effet, on considère des données codées sur une taille fixe de $m * k$ bits, ce qui induit la réalisation d'opérations inutiles si les opérandes ont des mots de poids les plus forts de k bits égaux à zéro, en particulier en ce qui concerne le multiplicande. L'invention permet d'envisager de réduire le nombre d'opérations, et plus particulièrement le nombre d'utilisations du registre 16. Elle permet par ailleurs de mettre en oeuvre une multiplication modulaire quelle que soit la taille en bits du multiplicande.

Avantageusement, l'invention propose un procédé caractérisé en ce que :

- on produit $H = 2^{(a+b)*k} \bmod N$,
- on produit une donnée intermédiaire codée sur m mots de k bits en fournissant les m mots de H et les a mots de A respectivement à l'entrée série et à l'entrée parallèle du circuit de multiplication, et

- on produit A * B mod N en fournissant les m mots de la donnée intermédiaire et les b mots de B respectivement à l'entrée série et à l'entrée parallèle du circuit de multiplication.

Ainsi, on pourra réaliser des opérations sur des opérandes, multiplicande et multiplieur, de tailles quelconques. En particulier, ces opérandes pourront être toutes deux codées sur un nombre de mots supérieur à m, et être supérieures au modulo.

L'invention propose également, B étant inférieur ou égal à N de :

- produire $H = 2^{(a+m')*k} \bmod N$,
- produire une donnée intermédiaire codée sur m mots de k bits en fournissant m mots, correspondants à B codé sur m mots de k bits, et les a mots de A respectivement à l'entrée série et à l'entrée parallèle du circuit de multiplication, et
- produire A * B mod N en fournissant les m mots de la donnée intermédiaire et les m' mots de poids faible de H respectivement à l'entrée série et à l'entrée parallèle du circuit de multiplication.

L'invention propose également un procédé caractérisé en ce qu'on compare (a + b) et m', et,

- si a + b < m' alors on produit A * B mod N en fournissant m mots, correspondants à $B * 2^{a*k}$ codé sur m mots, et les a mots de A respectivement à l'entrée série et à l'entrée parallèle du circuit de multiplication,
- si a + b = m' alors

on compare $B * 2^{a*k}$ et N, et

- si $B * 2^{a*k} < N$, on produit A * B mod N en fournissant m mots, correspondants à $B * 2^{a*k}$ codé sur m mots, et les a mots de A respectivement à l'entrée série et à l'entrée parallèle du circuit de multiplication,
- sinon, on produit A * B mod N en fournissant m mots, correspondants à $B * 2^{a*k} \bmod N$ codé sur m mots, et les a mots de A respectivement à l'entrée série et à l'entrée parallèle du circuit de multiplication.

Ainsi, on pourra, dans certains cas, réaliser une multiplication modulaire sans avoir à calculer de paramètre de correction d'erreur H.

L'invention sera mieux comprise, et d'autres particularités et avantages apparaîtront dans la description ci-après de modes de réalisation de l'invention, donnés à titre indicatif et nullement limitatif, lue conjointement aux dessins annexés, dans lesquels :

- la figure 1 représente schématiquement un circuit permettant de mettre en oeuvre une multiplication modulaire selon la méthode Montgomery,
- la figure 2 représente un circuit mis en oeuvre dans la production d'un paramètre de correction d'erreur selon l'invention.

La figure 1 représente un circuit 1 de traîtement d'opérations modulaires.

Il comprend :

- trois registres à décalage 10, 11 et 12 à entrée et sortie série. Ces registres comportent chacun un même nombre n de cellules, avec n = m * k. Ces registres pourront être subdivisables, par exemple en registres de n/2 cellules, et en registres de k bits pour les registres 10 et 12.
- des multiplexeurs 13, 14 et 15 sont placés respectivement devant les registres 10, 11 et 12. On placera également des multiplexeurs devant les subdivisions si celles ci existent.
- trois registres 16, 17 et 18 comportant chacun k cellules. Les registres 16 et 17 et 18 sont des registres à sortie parallèle et entrée série.
- deux circuits de multiplication 19 et 20 comprenant chacun une entrée série, une entrée parallèle et une sortie série. L'entrée parallèle du circuit de multiplication 19 est reliée à la sortie du registre 16 par le biais d'une bascule de mémorisation 21 de k cellules. L'entrée parallèle du circuit de multiplication 20 est reliée à l'une des sorties des registres 17 ou 18, par le biais d'une bascule de mémorisation 22 de k cellules. Cette bascule 22 est elle-même reliée à l'une des sorties des registres 17 et 18, par le biais d'un multiplexeur à deux entrées parallèles et une sortie parallèle.
- des multiplexeurs 24, 25, 25', 26, 36 et 38.
- un démultiplexeur 39.
- des circuits de soustraction série 27, 28 et 29.
- des circuits d'addition série 30 et 31.
- des circuits de retardement 32, 33 et 34 pour retarder de k temps de cycle la propagation de données binaires.
- un circuit 35 de stockage de résultat de comparaison.

Pour plus de détails, on pourra se reporter à la demande de brevet européen citée (EP - 0 601 907 A2), et en particulier à la figure 3 de cette demande, et aux extraits de la description s'y rapportant : page 15, ligne 54 - page 16, ligne 13, et page 17, ligne 50 - page 18, ligne 55.

Le circuit de la figure 1 permet de mettre en oeuvre l'invention.

Dans la suite de la description on considérera qu'on a :

- un multiplicande A (donnée binaire) et un multiplieur B (donnée binaire) codés sur respectivement a et b mots de k bits, les mots de poids le plus fort de A et B étant non nuls,

- un modulo N (donnée binaire) codé sur m mots de k bits, le modulo ayant (m - m') mots de poids les plus forts de k bits nuls, avec $0 < m' \leq m$.

Par taille utile d'une donnée binaire, on entendra le nombre minimum de mots de k bits nécessaire et suffisant pour représenter une donnée, c'est à dire le nombre minimum de mots tel que le mot de poids le plus fort ait au moins un bit égal à un. Ainsi : A et B, et N auront une taille utile respectivement égale à a, b, et m'.

Par nombre de bits utiles, on entendra le nombre minimum de bits nécessaire et suffisant pour représenter une donnée, c'est à dire le nombre minimum de bits tel que le bit de poids le plus fort soit égal à un.

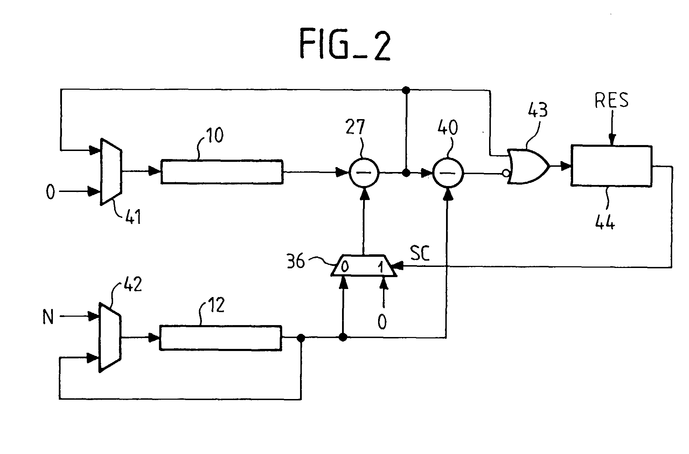

La figure 2 représente un circuit comprenant :

- les deux registres à décalage 10 et 12, le circuit de soustraction 27, le multiplexeur 36,
- deux multiplexeurs à deux entrées 41 et 42, dont les sorties respectives sont reliées respectivement aux entrées des registres 10 et 12,
- un circuit de soustraction série 40,
- une porte NON ET 43 à deux entrées,
- un circuit 44 de stockage de résultat de comparaison.

Les circuits de soustraction 27 et 40 ont deux entrées série et une sortie série.

Le circuit de soustraction 27 a une première entrée reliée à la sortie du registre 10, et sa sortie est reliée à une première entrée du circuit de soustraction 40. Le circuit de soustraction 40 a sa deuxième entrée reliée à la sortie du registre 12, et sa sortie reliée à une entrée inverseuse de la porte 43.

L'autre entrée (non inverseuse) de la porte 43 est reliée à la sortie du circuit de soustraction 27. Sa sortie est reliée à une entrée du circuit 44. Ce circuit 44 a une autre entrée pour recevoir un signal de réinitialisation RES.

Le multiplexeur 36 a deux entrées et une sortie. Sa sortie est reliée à la deuxième entrée du circuit de soustraction 28. Ses entrées sont reliées respectivement à la sortie du registre 12 et à une masse (potentiel correspondant à un 0 logique). Le multiplexeur 36 relie sélectivement sa sortie à sa première ou sa deuxième entrée suivant l'état d'un signal de sélection SC reçu du circuit 44 (par exemple, à la première entrée si SC = 0, et à la deuxième entrée si SC = 1).

Le multiplexeur 41 a ses entrées reliées respectivement à la sortie du circuit de soustraction 27 et à la masse.

Le multiplexeur 42 a ses entrées reliées respectivement à la sortie du registre 12 et à une borne d'entrée pour recevoir en série une donnée binaire (en pratique, le modulo N).

Le circuit de la figure 2 est utilisé pour produire un paramètre de correction d'erreur H qui est une donnée binaire.

On souhaite produire une donnée binaire représentative de A * B mod N.

Plusieurs méthodes sont envisageables.

**- Si a + b > m' :**

On procédera selon les étapes suivantes :

P1 - production d'un paramètre de correction d'erreur $H = 2^{(a+b)*k} \bmod N$, de taille utile inférieure ou égale à m', et d'un paramètre $J_0$ codé sur k bits, avec $J_0 = - N_o^{-1} \bmod 2^k$, $N_0$ étant le mot de poids le plus faible du modulo N, et stockage de $J_0$ dans le registre 17 de k bits,

P2 - chargement du paramètre H dans le registre 10 et du modulo N dans le registre 12, et initialisation du registre 11 de n = m * k bits à zéro, le contenu de ce registre 11 étant noté S, avec S donnée variable binaire codée sur n bits,

P3 - mise en oeuvre d'une boucle, indicée par i, avec i variant de 1 à a, chaque $i^{ième}$ itération comprenant les opérations suivantes :

a) transfert du $i^{ième}$ mot $A_{i-1}$ du multiplicande A du registre 16 vers la bascule de mémorisation 21,

b) production d'une valeur $X(i) = S(i-1) + H * A_{i-1}$ avec $S(0) = 0$ (n bits à zéro) et $S(i-1)$ la valeur dite actualisée de S, définie ci-après, en :

I - décalant à droite le contenu du registre 10 vers l'entrée du circuit de multiplication 19 série-parallèle, avec rebouclage de la sortie du registre 10 sur son entrée,

II - multipliant les bits de H par $A_{i-1}$,

III - décalant à droite le contenu du registre 12, avec rebouclage de la sortie de ce registre sur son entrée,

IV - déterminant la valeur actualisée de S $(i-1)$ comme étant la valeur stockée dans le registre 11 après la $(1-i)^{ième}$ itération, si celle ci est inférieure à N, et si elle est plus grande, en soustrayant en série N de celle-ci dans le circuit de soustraction 28, la valeur en résultant étant la valeur actualisée de $S(i-1)$, et

V - décalant à droite le contenu du registre 11 et en additionnant bit à bit la valeur de la multiplication $H * A_{i-1}$ avec la valeur actualisée de $S(i-1)$ dans le circuit d'addition 30,

c) multiplication, dans le circuit de multiplication 20, du mot le moins significatif de $X(i)$, $X_0(i)$, par $J_0$, et entrée de la valeur $X_0(i) * J_0 \bmod 2^k = Y_0$ (i) dans le registre 18, et simultanément retarder N et $X(i)$ de k cycles dans les circuits de retardement 32 et 34,

d) calcul d'une valeur $Z(i) = X(i) + Y_0(i) * N$ en :

    I - multipliant $Y_0(i)$ par N, retardé de k cycles, dans le circuit de multiplication 20, et

    II - additionnant X(i) à la valeur $Y_0(i) * N$ bit à bit dans le circuit d'addition 31,

e) ne pas prendre en compte le mot le moins significatif de Z(i) et stocker les mots restants, c'est à dire $Z(i)/2^k$, dans le registre 11,

f) comparer $Z(i)/2^k$ à N, bit à bit, dans le but de déterminer la valeur actualisée S(i) de l'itération suivante, de la manière décrite ci-dessus, cette comparaison se faisant en soustrayant bit à bit $Z(i)/2^k$ et N dans le circuit de soustraction 29, N ayant été retardé de k cycles supplémentaires dans le circuit de retardement 33,

g) le $i^{ième}$ mot du multiplicande A étant chargé dans le registre 16 à un instant quelconque pendant les opérations ci-dessus;

P4 à la $a^{ième}$ itération, ignorer le mot le moins significatif de Z(a) et entrer les mots restants, c'est à dire $Z(a)/2^k = A * 2^{b*k}$ mod N, dans le registre 10,

P5 - répéter les étapes P3 et P4, dans lesquelles :

- on substitue B à A, et on fournit $Z(m)/2^k$ ou $(Z(m)/2^k) - N$, par le biais du circuit de soustraction 27, au circuit de multiplication 19,
- on a i variant de 1 à b.

P6 - sortie du résultat stocké dans le registre 10 à la dernière itération, éventuellement soustrait de N si nécessaire, par le biais du circuit de soustraction 27.

Dans le procédé ci-dessus on utilise p fois le registre 16, avec $p = a + b$.

On notera que l'on pourra avoir $a + b > 2 * m$, et $b > m'$, ce qui n'était pas possible dans le mode de calcul antérieur.

Le temps de calcul nécessaire pour obtenir le résultat cherché sera de $(a + b) * (n + 2 * k + x)$ temps de cycle au lieu de $2 * m * (n + 2 * k + x)$ temps de cycle dans la technique antérieure.

Par temps de cycle, on entend la période du signal d'horloge synchronisant le fonctionnement du circuit de la figure 1.

En pratique, x est fonction de l'initialisation du circuit, c'est à dire principalement de l'établissement de signaux de commande (de multiplexeurs par exemple) pour assurer un fonctionnement cohérent du circuit.

En ce qui concerne la production du paramètre de correction d'erreur H, on procédera suivant les étapes suivantes, à lire concurremment à la figure 2 :

H1 - chargement du modulo N dans le registre 12, et initialisation du registre 10, le contenu du deuxième registre étant noté B(0) ( $n = m * k$ bits à 0), et initialisation du registre 44 (c'est à dire production d'un signal RES tel que SC = 0),

H2 - sortie de N du registre 12 par décalage à droite, avec rebouclage de sa sortie sur son entrée, de l bits, avec l le nombre de bits utiles du modulo N, afin d'avoir un bit de poids le plus fort à 1 dans le registre 12,

H3 - production et stockage d'une donnée $B(1) = 2 * (B(0) - N')$, codée sur n bits, avec $N' = N * 2^{n-1}$, N' correspondant à la donnée binaire stockée dans le registre 12, par :

- sortie de N' et B(0) par décalage à droite dans les registres 10 et 12 du contenu de ces registres, l'entrée du registre 10 étant reliée à la sortie du circuit de soustraction 27, et l'entrée du registre 12 étant reliée à sa sortie,
- soustraction bit à bit, dans le circuit de soustraction 27, au fur et à mesure de leur sortie, des bits de N' et B(0), avec décalage à gauche d'une unité du résultat noté $R(0) = B(0) - N'$,
- chargement du résultat de la soustraction après décalage, noté $B(1) = 2 * R(0)$, dans le registre 10,
- soustraction bit à bit, dans le circuit de soustraction 40, de B(1) et N', pour déterminer si B(1) est $\geq$ ou < à N', et production par le circuit 44 de SC = 0 si $B(1) \geq N'$, et de SC = 1 si $B(1) < N'$,

H4 - production d'une donnée $H_{int} = 2^V$ mod N', avec $v = n - l + m' * k + (a + b - m') * k/2^r$, avec r un entier tel que $k/2^r$ soit entier, par : mise en oeuvre d'une boucle indicée par un indice i, i entier de 1 à v, chaque $i^{ième}$ itération comprenant les opérations suivantes :

- si $B(i) < N'$ alors chargement dans le registre 10 de $B(i+1) = 2 * (B(i) - 0) = 2 * B(i)$ après décalage à gauche de B(i) d'une unité, et comparaison bit à bit de B(1+1) et de N',
- sinon soustraction bit à bit de N' et B(i), avec décalage à gauche d'une unité du résultat et chargement dans le registre 10 de $B(1+1) = 2 * (B(i) - N')$, et comparaison bit à bit de B(i+1) et de N',

H5 - si $B(v+1) \geq N'$ : soustraction bit à bit de B(v+1) et N' dans le circuit de soustraction 27, ce qui donne $2 * (B(v+1) - N')$ et chargement dans le registre 10 de B(v+1) - N', ce qui nécessite un décalage à droite d'une unité,

H6 - décalage à droite de n - l bits dans les registres 10 et 12,

H7 - production du paramètre H par la mise en oeuvre de r opérations $P_{field}$ :

$H_{int}(j) = P(H_{int}(j-1), H_{int}(j-1))_N$ avec j indice de 1 à r, et $H_{int}(0) = B(v+1) * 2^{l-n}$ ou $(B(v+1) - N') * 2^{l-n}$.

$H_{int}(0) = 2^{v'} \bmod N$, avec $v' = m' * k + (a + b - m') * k/2^r$.

On obtient ainsi $H = 2^{(a+b)*k} \bmod N$.

Pour la mise en oeuvre des opérations $P_{field}$, on procédera selon les étapes suivantes :

Soit j = 1,

1 - production d'un paramètre $J_0$ codé sur k bits, avec $J_0 = - N_o^{-1} \bmod 2^k$, $N_0$ étant le mot de poids le plus faible du modulo N, et stockage de $J_0$ dans le registre 17 de k bits,

2 - initialisation du registre 11 de n = m * k bits à zéro, le contenu de ce registre 11 étant noté S, avec S donnée variable binaire codée sur n bits,

3 - mise en oeuvre d'une boucle, indicée par i, avec i variant de 1 à m', chaque $i^{ième}$ itération comprenant les opérations suivantes :

a) transfert du $i^{ième}$ mot $H_{i-1}$ du multiplicande $H_{int}(j-1)$ du registre 16 vers la bascule de mémorisation 21,

b) production d'une valeur $X(i) = S(i-1) + H * H_{i-1}$ avec $S(0) = 0$ (n bits à zéro) et $S(i-1)$ la valeur dite actualisée de S,

c) multiplication, dans le circuit de multiplication 20, du mot le moins significatif de X(i), $x_0(i)$, par $J_0$, et entrée de la valeur $x_0(i) * J_0 \bmod 2^k = Y_0(1)$ dans le registre 18, et simultanément retarder N et X(i) de k cycles dans les circuits de retardement 32 et 34,

d) calcul d'une valeur $Z(i) = X(i) + Y_0(1) * N$ en :

I - multipliant $Y_0(1)$ par N, retardé de k cycles, dans le circuit de multiplication 20, et

II - additionnant X(i) à la valeur $Y_0(1) * N$ bit à bit dans le circuit d'addition 31,

e) ne pas prendre en compte le mot le moins significatif de Z(i) et stocker les mots restants, c'est à dire $Z(i)/2^k$, dans le registre 11,

f) comparer $Z(i)/2^k$ à N, bit à bit, dans le but de déterminer la valeur actualisée S(i) de l'itération suivante, de la manière décrite ci-dessus, cette comparaison se faisant en soustrayant bit à bit $Z(i)/2^k$ et N dans le circuit de soustraction 29, N ayant été retardé de k cycles supplémentaires dans le circuit de retardement 33,

g) le $i^{ième}$ mot du multiplicande $H_{int}(j-1)$ étant chargé dans le registre 16 à un instant quelconque pendant les opérations ci-dessus;

4 - à la $m^{ième}$ itération, ignorer le mot le moins significatif de Z(m') et entrer les mots restants, c'est à dire $Z(m')/2^k$ dans le registre 10,

5 - répéter (r - 1) fois les étapes 3 et 4, dans lesquelles on substitue $H_{int}(j)$ à $H_{int}(j-1)$.

6 - sortie du résultat stocké dans le registre 10 à la dernière itération, éventuellement soustrait de N si nécessaire, par le biais du circuit de soustraction 27.

En ce qui concerne la production du paramètre $J_0$, elle aura pu être réalisée antérieurement à la mise en oeuvre des opérations modulaires. En effet, elle est réalisée par l'unité centrale et est donc indépendante du coprocesseur.

On remarquera que l'invention propose de calculer un paramètre de correction d'erreur H en mettant en oeuvre d'une part des soustractions en nombre moins important que dans le procédé connu, et d'autre part des opérations $P_{field}$, ce qui permet de diminuer éventuellement le temps nécessaire pour réaliser l'étape P1 du procédé de multiplication.

Dans l'art antérieur, le calcul de H nécessitait n * (n + 1) temps de cycle.

Suivant le procédé ci-dessus, le temps nécessaire est de $n * (m' * k - l + (a + b - m') * k/2^r + 1) + r * m' * (n + 2 * k + x)$.

**- si a + b > m' et B < N :**

Si B est inférieur à N, on pourra modifier le procédé décrit ci-dessus en :

- produisant $H = 2^{(a+m')*k} \bmod N$,
- produisant une donnée intermédiaire $C = P(A, B)_N = A * B * I_a \bmod N$, codée sur n bits, avec $I_a = 2^{-a*k} \bmod N$ erreur associée à A, en fournissant m mots, correspondants à B codé sur m mots de k bits, et les a mots de A respectivement à l'entrée série et à l'entrée parallèle du circuit de multiplication,
- en produisant $P(H, C)_N = H * C * I_h \bmod N$, avec $I_h = 2^{-m'*k} \bmod N$, en fournissant les m mots de la donnée intermédiaire et les m' mots de poids faible de H respectivement à l'entrée série et à l'entrée parallèle du circuit de multiplication.

Le procédé de mise en oeuvre de multiplication modulaire comprend alors les étapes suivantes :

P1 - production du paramètre de correction d'erreur H et d'un paramètre $J_0$ codé sur k bits, et stockage de $J_0$ dans le registre 17,

P2 - chargement du multiplieur B et du modulo N respectivement dans les registres 10 et 12, et initialisation du registre 11 à zéro, le contenu de ce registre étant noté S,

P3 - mise en oeuvre d'une boucle, indicée par i, avec i variant de 1 à a, chaque $i^{ième}$ itération comprenant les opérations suivantes :

a) transfert du $i^{ième}$ mot $A_{i-1}$ du multiplicande A

du registre 16 vers la bascule de mémorisation 21,

b) production d'une valeur $X(i) = S(i-1) + B * A_{i-1}$ avec $S(0) = 0$ et $S(i-1)$ la valeur dite actualisée de S, définie ci-après, en :

    I - décalant à droite le contenu du registre 10 vers l'entrée série du circuit de multiplication 19 série-parallèle, avec rebouclage de la sortie du registre 10 sur son entrée,

    II - multipliant les bits de B par $A_{i-1}$,

    III - décalant à droite le contenu du registre 12, avec rebouclage de la sortie du registre sur son entrée,

    IV - déterminant la valeur actualisée de $S(i-1)$ comme étant la valeur stockée dans le registre 11 après la $(i-1)^{ième}$ itération, si celle ci est inférieure à N, et si elle est plus grande, en soustrayant en série N de celle-ci, la valeur en résultant étant la valeur actualisée de $S(i-1)$, et

    V - décalant à droite le contenu du registre 11 et additionnant bit à bit la valeur de la multiplication $B * A_{i-1}$ avec la valeur actualisée de $S(i-1)$,

c) multiplication du mot le moins significatif de $X(i)$, $X_0(i)$, par $J_0$, et entrée de la valeur $X_0(i) * J_0 \bmod 2^k = Y_0(1)$ dans le registre 18, et simultanément retarder N et $X(i)$ de k cycles,

d) calcul d'une valeur $Z(i) = X(i) + Y_0(i) * N$ en :

    I - multipliant $Y_0(i)$ par N, retardé de k cycles, et

    II - additionnant $X(i)$ à la valeur $Y_0(i) * N$,

e) ne pas prendre en compte le mot le moins significatif de $Z(i)$ et stocker les mots restants, c'est à dire $Z(i)/2^k$, dans le registre 11,

f) comparer $Z(i)/2^k$ à N, bit à bit, dans le but de déterminer la valeur actualisée $S(i)$ de l'itération suivante, de la manière décrite ci-dessus,

g) le $i^{ième}$ mot du multiplicande A étant chargé dans le registre 16 à un instant quelconque pendant les opérations ci-dessus;

    P4 - à la $a^{ième}$ itération, ignorer le mot le moins significatif de $Z(a)$ et entrer les mots restants, dans le registre 10,

    P5 - répéter les étapes P3 et P4, dans lesquelles :

    -   on substitue H à A, et on fournit $Z(a)/2^k$ ou $(Z(a)/2^k) - N$, au circuit de multiplication 19,

    -   on a i variant de 1 à m'.

    P6 - sortie du résultat stocké dans le registre 10 à la dernière itération, éventuellement soustrait de N si nécessaire.

A pourra être codé sur un nombre a de mots supérieur à m.

Pour calculer H, on procédera de la manière suivante (voir figure 2) :

    H1 - chargement du modulo N dans le registre 12, et initialisation du registre 10 à zéro, le contenu du registre 10 étant noté $B(0)$,

    H2 - décalage à droite, avec rebouclage sur son entrée, de l bits du registre 12, avec l le nombre de bits utiles du modulo,

    H3 - production et stockage d'une donnée $B(1) = 2 * (B(0) - N')$, codée sur n bits, avec $N' = N * 2^{n-1}$, par :

    -   décalage à droite dans les deux registres et soustraction bit à bit des contenus des registres, avec décalage à gauche de une unité du résultat, noté $R(0)$, de la soustraction bit à bit,

    -   chargement du résultat de la soustraction après décalage, noté $B(1)$, dans le registre 10,

    -   comparaison de $B(1)$ et de $N'$,

    H4 - production d'une donnée $H_{int} = 2^v \bmod N'$, avec $v = n - l + m' * k + a * k/2^r$, avec r un entier tel que $k/2^r$ soit entier, par : mise en oeuvre d'une boucle indicée par un indice i, i entier de 1 à v, chaque $i^{ième}$ itération comprenant les opérations suivantes :

    -   si $B(i) < N'$ alors chargement dans le registre 10 de $B(i+1) = 2 * B(i)$ après décalage à gauche de $B(i)$ de une unité, et comparaison bit à bit de $B(i+1)$ et de $N'$,

    -   sinon soustraction bit à bit de $N'$ et $B(i)$, avec décalage à gauche de une unité du résultat et chargement dans le deuxième registre de $B(i+1) = 2 * (B(i) - N')$, et comparaison bit à bit de $B(i+1)$ et de $N'$,

    H5 - si $B(v+1) \geq N'$ : soustraction bit à bit de $B(v+1)$ et $N'$, et chargement dans le registre 10 de $B(v+1) - N'$,

    H6 - décalage à droite de n - l bits dans les registres 10 et 12,

    H7 - production du paramètre H par la mise en oeuvre de r opérations $P_{field}$ :

      $H_{int}(j) = P(H_{int}(j-1), H_{int}(j-1))_N$ avec j indice de 1 à r, et $H_{int}(0) = B(v+1) * 2^{l-n}$ ou $(B(v+1) - N') * 2^{l-n}$.

Pour les différents calculs de H, on pourra prendre par exemple $r = \log_2(k) - 1$.

Par rapport au procédé de production de H vu auparavant, on notera une modification du paramètre v afin de s'adapter au cas présent.

**- si a + b ≤ m' :**

On pourra alors distinguer deux cas :

- si a + b < m' alors on produira A * B mod N en fournissant m mots, correspondants à B * 2$^{a*k}$ codé sur m mots, et les a mots de A respectivement à l'entrée série et à l'entrée parallèle du circuit de multiplication 19,

- si a + b = m' alors

on compare B * 2$^{a*k}$ et N, et

- si B * 2$^{a*k}$ < N, on produira A * B mod N en fournissant m mots, correspondants à B * 2$^{a*k}$ codé sur m mots, et les a mots de A respectivement à l'entrée série et à l'entrée parallèle du circuit de multiplication 19,

- sinon, on produit A * B mod N en fournissant m mots, correspondants à B * 2$^{a*k}$ mod N codé sur m mots, et les a mots de A respectivement à l'entrée série et à l'entrée parallèle du circuit de multiplication 19.

Ainsi, on ne sera pas obligé dans ces conditions de produire un paramètre de correction d'erreur H, et on utilisera une seule opération de calcul pour obtenir le résultat. La correction d'erreur est répercutée sur l'opérande B, en la remplaçant par B * 2$^{a*k}$ mod N, ce qui correspond à un simple décalage à gauche de B (assorti éventuellement d'une soustraction si B * 2$^{a*k}$ ≥ N).

On produira ainsi P(A, B * 2$^{a*k}$)$_N$ = A * B mod N.

On voit ici tout l'intérêt qu'il y a à utiliser l'entrée parallèle du circuit de multiplication 19 un nombre de fois indépendant de m.

Par rapport au circuit tel qu'il existe dans l'état de la technique, on sera bien sûr obligé de modifier le circuit de séquencement produisant les signaux de commande nécessaires au fonctionnement du circuit illustré figure 1. Ainsi, on devra utiliser un compteur programmable pour gérer d'une part l'utilisation du registre 16, car on utilisera un nombre de fois variable ce registre, et d'autre part les décalages dans les registres lors de la production de H en fonction du nombre de bits utiles du modulo.

Pour réaliser les comparaisons de a, b et m permettant de choisir le procédé le plus rapide, on utilisera typiquement l'unité centrale associée au coprocesseur arithmétique. On pourrait éventuellement réaliser ces comparaisons à l'aide d'un circuit composée de circuits de soustractions et d'addition, spécifiquement développé à cet effet.

Dans le circuit tel qu'il existe dans l'état de la technique, on utilise des registres 10, 11 et 12 configurables en registres de 8 ou 16 mots de 32 bits. Si on souhaite diminuer encore le temps de calcul associé à une multiplication modulaire, on pourra utiliser des registres configurables de 1 à 16 mots de 32 bits. Cela correspond à choisir en pratique de considérer que m est variable, tel par exemple que m = m'. Pour se faire, il suffit de rajouter des multiplexeurs supplémentaires dans le circuit de calcul au niveau des registres 10, 11 et 12. Cela permettra, il est vrai au détriment de l'encombrement, de diminuer le temps nécessaire aux décalages dans les registres 10, 11 et 12, en s'adaptant à la taille utile des données binaires manipulées.

La gestion du registre 16 tel qu'envisagée ci-dessus pourra être étendue avantageusement à la mise en oeuvre des calculs ci-dessous.

**Méthode RSA.**

La métode de cryptage RSA nécessite de faire des calculs du type C = M$^D$ mod N avec M un message à crypter ou à décrypter, N un modulo tel que N = P * Q, avec P et Q des nombres premiers, et D tel que D * E = 1 mod ((P-1) * (Q -1)), avec E connu.

Un algorithme pour réaliser ce calcul est le suivant :

$$A = (M \bmod P)^{D \bmod (P - 1)} \bmod P$$

$$B = (M \bmod Q)^{D \bmod (Q - 1)} \bmod Q$$

$$U = Q^{-1} \bmod P$$

Si A < B mod P alors
C = (((A + P - (B mod P)) * U) mod P) * Q + B
Sinon

$$C = (((A - (B \bmod P)) * U) \bmod P) * Q + B$$

Cette algorithme met donc notamment en oeuvre :

- 2 réductions modulaires,
- 2 exponentiations modulaires,
- 1 multiplication modulaire.

Il sera particulièrement intéressant de pouvoir mettre en oeuvre les procédés de l'invention pour réaliser ces calculs de la manière la plus rapide possible.

L'inventeur propose par ailleurs de modifier les registres utilisés, par exemple en choisissant des registres modulables pouvant comporter au choix 32, 256, (256 + n), 384, (384 + n), 512, ou (512 + n) cellules, avec n un nombre entier. On prendra par exemple n = 32.

On s'oriente vers des choix de modulo codés sur 512, 768 et 1024 bits.

Le choix de registres modulables tels que définis ci-dessus permet :

- dans le cadre général des opérations modulaires, de minimiser le nombre de décalages dans les registres en s'adaptant de manière plus flexible aux tailles utiles des données traitées,

- dans le cadre plus particulier de la mise en oeuvre du codage RSA, de pouvoir choisir des tailles différentes pour P et Q. Par exemple, si on souhaite avoir un modulo N = P * Q codé sur 512 bits, on pourra par exemple choisir P sur 254 bits et Q sur 258 bits. On utilisera un registre de 256 cellules pour les calculs concernant P, et de 256 + n = 288 cellules pour les calculs concernant Q. Avec le circuit de l'art antérieur, on aurait été obligé d'utiliser un registre de 512 cellules pour les calculs concernant Q, ce qui aurait été préjudiciable pour la durée des calculs.

**Adaptation des procédés à un modulo pair.**

Le coprocesseur tel qu'il est utilisé nécessite de choisir des modulo N impairs (bit de poids le plus faible à 1). C'est une nécessité pour le calcul de $J_0$.

L'inventeur propose d'étendre les procédés décrits ci-dessus à la réalisation de multiplications modulaires avec un modulo pair.

Bien qu'on ne l'ait pas précisé, il est bien sûr évident que les opérations modulaires n'ont d'intérêt que si N n'a pas tous ses bits à 0.

Si N est pair et non nul, il est toujours possible de trouver une donnée binaire N' telle que $N = N' * 2^g$, avec N' impaire et $1 > g > 1$.

La taille utile de N' étant inférieure à celle de N, on pourra considérer que N' est codée sur m' mots de k bits. On pourra également considérer la taille utile réelle m" (en mots) de N'. Cette dernière option est bien entendu la plus intéressante si on souhaite optimiser au mieux la durée des opérations modulaires.

On mettra en oeuvre les opérations en considérant que le modulo est N', en produisant $A * B * 2^{-g} \bmod N'$, et en multipliant ce résultat par $2^g$ (soit par méthode logicielle au sein de l'unité centrale, soit par décalage dans un registre).

**- Si a + b > m" :**

La méthode est la suivante :

- on produit $H = 2^{(a+b)*k-g} \bmod N'$,
- on produit une donnée intermédiaire $P(A, H)_{N'} = A * 2^{b*k-g} \bmod N'$, codée sur n bits, en fournissant m mots, correspondants à H codé sur m mots, et les a mots de A respectivement à l'entrée série et à l'entrée parallèle du circuit de multiplication, et
- on produit $A * B * 2^{-g} \bmod N'$ en fournissant les m mots de la donnée intermédiaire et les b mots de B respectivement à l'entrée série et à l'entrée parallèle du circuit de multiplication,
- on produit $A * B \bmod N$ par décalage.

Le dernier décalage sera matériellement réalisé ou non suivant que l'on utilisera un registre ou l'unité centrale.

Il est bien entendu nécessaire de modifier la production de H en conséquence.

On procèdera avantageusement de la manière suivante :

H1 - chargement du modulo N' (ou de N) dans le registre 12, et initialisation du registre 10, le contenu du deuxième registre étant noté B(0) ( n = m * k bits à 0), et initialisation du registre 44 (c'est à dire production d'un signal RES tel que SC = 0),

H2 - sortie de N' du registre 12 par décalage à droite, avec rebouclage de sa sortie sur son entrée, de l - g bits (ou de l bits), avec l le nombre de bits utiles du modulo N, afin d'avoir un bit de poids le plus fort à 1 dans le registre 12,

H3 - production et stockage d'une donnée B(1) = 2 * (B(0) - N"), codée sur n bits, avec $N" = N' * 2^{n-l+g}$, N" correspondant à la donnée binaire stockée dans le registre 12, par :

- sortie de N" et B(0) par décalage à droite dans les registres 10 et 12 du contenu de ces registres, l'entrée du registre 10 étant reliée à la sortie du circuit de soustraction 27, et l'entrée du registre 12 étant reliée à sa sortie,
- soustraction bit à bit, dans le circuit de soustraction 27, au fur et à mesure de leur sortie, des bits de N" et B(0), avec décalage à gauche de une unité du résultat noté R(0) = B(0) - N",
- chargement du résultat de la soustraction après décalage, noté B(1) = 2 * R(0), dans le registre 10,
- soustraction bit à bit, dans le circuit de soustraction 40, de B(1) et N", pour déterminer si B(1) est ≥ ou < à N", et production par le circuit 44 de SC = 0 si B(1) ≥ N", et de SC = 1 si B(1) < N",

H4 - production d'une donnée $H_{int} = 2^V \bmod N"$, avec

$v = n - l + m' * k + (a + b - m') * k/2^r$, avec r un entier tel que $k/2^r$ soit entier, par : mise en oeuvre d'une boucle indicée par un indice i, i entier de 1 à v, chaque $i^{ième}$ itération comprenant les opérations suivantes :

- si B(i) < N" alors chargement dans le registre 10 de B(i+1) = 2 * (B(i) - 0) = 2 * B(i) après décalage à gauche de B(i) de une unité, et comparaison bit à bit de B(i+1) et de N",
- sinon soustraction bit à bit de N" et B(i), avec décalage à gauche de une unité du résultat et chargement dans le registre 10 de B(i+1) = 2 * (B(i) - N"), et comparaison bit à bit de B(i+1) et de N",

H5 - si B(v+1) ≥ N" : soustraction bit à bit de B(v+1) et N" dans le circuit de soustraction 27, ce qui donne 2 * (B(v+1) - N") et chargement dans le registre 10 de B(v+1) - N", ce qui nécessite un décalage à droite de une unité,

H6 - décalage à droite de n - l bits dans les registres 10 et 12,

H7 - mise en oeuvre de r opérations $P_{field}$ :

$H_{int}(j) = P(H_{int}(j-1), H_{int}(j-1))_{N'}$ avec j indice de 1 à r, et $H_{int}(0) = B(v+1) * 2^{l-n}$ ou $(B(v+1) - N") * 2^{l-n}$.

$H_{int}(0) = 2^{v'} mod N'$, avec $v' = m' * k + (a + b - m') * k/2^r$.

On obtient ainsi $2^{(a+b)*k} mod N'$.

H8 - production du paramètre H par :

- production de $2^{u*k-g} mod N'$ avec u un entier tel que $u * k \geq g > (u - 1) * k$,
- réalisation d'une opération $P_{field}$ pour obtenir H $= P(2^{u*k-g} mod N', 2^{(a+b)*k} mod N')_{N'}$.

**- si a + b > m" et B ≤ N' :**

La méthode est la suivante :

- on produit $H = 2^{(a+m")*k-g} mod N'$,
- on produit une donnée intermédiaire $P(A, B)_{N'} = A * B * 2^{-a*k} mod N'$, codée sur n bits, en fournissant m mots, correspondants à B codé sur m mots, et les a mots de A respectivement à l'entrée série et à l'entrée parallèle du circuit de multiplication, et
- on produit $A * B * 2^{-g} mod N'$ en fournissant les m mots de la donnée intermédiaire et les m" mots de poids faible de H respectivement à l'entrée série et à l'entrée parallèle du circuit de multiplication,
- on produit A * B mod N par décalage.

On aurait pu calculer $H = 2^{(a+m')*k-g} mod N'$. Cela correspondrait à considérer la taille utile de N au lieu de la taille utile de N', ce qui n'est pas judicieux si g est tel que m" < m'.

Pour la production de H, on se reportera aux étapes décrites précédemment concernant d'une part le cas où a + b > m" avec N pair, d'autre part le cas où a + b > m' et B ≤ N et N impair. L'adaptation se fait sans problème particulier pour l'homme du métier.

**- si a + b ≤ m" :**

On procèdera de la manière suivante :

- si a + b < m" alors on produira $A * B * 2^{-g} mod N'$ en fournissant m mots, correspondants à $B * 2^{a*k-g}$ codé sur m mots, et les a mots de A respectivement à l'entrée série et à l'entrée parallèle du circuit de multiplication 19,

- si a + b = m" alors

  on compare $B * 2^{a*k-g}$ et N', et

- si $B * 2^{a*k-g} < N'$, on produira $A * B * 2^{-g} mod N'$ en fournissant m mots, correspondants à $B * 2^{a*k-g}$ codé sur m mots, et les a mots de A respectivement à l'entrée série et à l'entrée parallèle du circuit de multiplication 19,
- sinon, on produit $A * B * 2^{-g} mod N'$ en fournissant m mots, correspondants à $B * 2^{a*k-g} mod N'$ codé sur m mots, et les a mots de A respectivement à l'entrée série et à l'entrée parallèle du circuit de multiplication 19.
- on produit A * B mod N par décalage.

L'invention est particulièrement avantageuse dans la mesure où on peut la mettre en oeuvre (pour ce qui est des procédés) sans modifier les circuits existants, illustrés figure 1 et 2. On modifie uniquement le circuit de séquencement permettant de produire les différents signaux de commande nécessaires au fonctionnement de ces circuits. En particulier, on est amené à prendre en compte les tailles utiles du modulo N et des opérandes. Avantageusement, on utilisera les procédés de l'invention en modifiant, tel qu'il est indiqué ci-dessus, le circuit 1.

On a supposé dans la figure 2 que l'on utilisait des ressources du circuit de la figure 2. Cela permet de minimiser la taille globale du coprocesseur. Bien entendu, on pourra utiliser un circuit dédié au seul calcul de H.

Bien entendu, on comprendra que les modifications introduites par l'invention peuvent s'appliquer à la réalisation de carrés modulaires, et donc à la réalisation d'exponentiations modulaires.

**Revendications**

1. Procédé de mise en oeuvre de multiplication modulaire selon la méthode de Montgomery, dans lequel un multiplicande A et un multiplieur B sont codés sur respectivement a et b mots de k bits, les mots de poids le plus fort de A et B étant non nuls, un modulo N est codé sur m mots de k bits, le modulo ayant (m - m') mots de poids les plus forts de k bits nuls, avec 0 < m' ≤ m,

   comprenant des étapes de multiplication dans un circuit de multiplication (19) ayant une entrée série pour recevoir des données codées sur au moins m' mots de k bits, une entrée parallèle pour recevoir des mots codés de k bits, et une sortie série,

   caractérisé en ce qu'on fournit successivement, lors de la mise en oeuvre de la multiplication, un nombre prédéterminé p de mots à l'entrée parallèle du circuit de multiplication, p étant indépendant de m et supérieur ou égal au nombre a.

2. Procédé selon la revendication 1, caractérisé en ce qu'il comprend une étape lors de laquelle on produit un paramètre de correction d'erreur $H = 2^{P*k}$ mod N codé sur m mots de k bits.

3. Procédé selon la revendication 2, caractérisé en ce que :

- on produit $H = 2^{(a+b)*k}$ mod N,
- on produit une donnée intermédiaire $P(A, H)_N$ codée sur m mots de k bits en fournissant les m mots de H et les a mots de A respectivement à l'entrée série et à l'entrée parallèle du circuit de multiplication, et
- on produit A * B mod N en fournissant les m mots de la donnée intermédiaire et les b mots de B respectivement à l'entrée série et à l'entrée parallèle du circuit de multiplication.

4. Procédé selon la revendication 3, caractérisé en ce qu'il comprend les étapes suivantes :

P1 - production du paramètre de correction d'erreur H et d'un paramètre $J_0$ codé sur k bits, et stockage de $J_0$ dans un registre (17) de k bits,
P2 - chargement du paramètre H et du modulo N dans des premier et deuxième registres respectifs (10, 12) de n bits, avec n = m * k, et initialisation d'un troisième registre (11) de n bits à zéro, le contenu de ce troisième registre étant noté S,
P3 - mise en oeuvre d'une boucle, indicée par i, avec i variant de 1 à a, chaque $i^{ième}$ itération comprenant les opérations suivantes :

a) transfert du $i^{ième}$ mot $A_{i-1}$ du multiplicande A d'un quatrième registre (16) vers une bascule de mémorisation (21),
b) production d'une valeur $X(i) = S(i-1) + H * A_{i-1}$ avec $S(0) = 0$ et $S(i-1)$ la valeur dite actualisée de S, définie ci-après, en :

I - décalant à droite le contenu du premier registre (10) vers l'entrée d'un premier circuit de multiplication (19) série-parallèle, avec rebouclage de la sortie du premier registre (10) sur son entrée,
II - multipliant les bits de H par $A_{i-1}$,
III - décalant à droite le contenu du deuxième registre (12), avec rebouclage de la sortie du registre sur son entrée,
IV - déterminant la valeur actualisée de S(i-1) comme étant la valeur stockée dans le troisième registre (11) après la $(i-1)^{ième}$ itération, si celle ci est inférieure à N, et si elle est plus grande, en soustrayant en série N de celle-ci, la valeur en résultant étant la valeur actualisée de S(i-1), et
V - décalant à droite le contenu du troisième registre (11) et additionnant bit à bit la valeur de la multiplication H * $A_{i-1}$ avec la valeur actualisée de S(i-1),

c) multiplication du mot le moins significatif de X(i), $x_0(i)$, par $J_0$, et entrée de la valeur $x_0(i) * J_0$ mod $2^k = Y_0(i)$ dans un registre (18), et simultanément retarder N et X(i) de k cycles,
d) calcul d'une valeur $Z(i) = X(i) + Y_0(i) * N$ en :

I - multipliant $Y_0(i)$ par N, retardé de k cycles, et
II - additionnant X(i) à la valeur $Y_0(i) * N$,

e) ne pas prendre en compte le mot le moins significatif de Z(i) et stocker les mots restants, c'est à dire $Z(i)/2^k$, dans le troisième registre (11),
f) comparer $Z(i)/2^k$ à N, bit à bit, dans le but de déterminer la valeur actualisée S(i) de l'itération suivante, de la manière décrite ci-dessus,

g) le $i^{iéme}$ mot du multiplicande A étant chargé dans le quatrième registre (16) à un instant quelconque pendant les opérations ci-dessus;
P4 - à la $a^{ième}$ itération, ignorer le mot le moins significatif de Z(a) et entrer les mots restants, dans le premier registre (10),
P5 - répéter les étapes P3 et P4, dans lesquelles :

- on substitue B à A, et on fournit Z $(a)/2^k$ ou $(Z(a)/2^k)$ - N, au premier circuit de multiplication (19),
- on a i variant de 1 à b.

P6 - sortie du résultat stocké dans le premier registre (10) à la dernière itération, éventuellement soustrait de N si nécessaire.

5. Procédé selon la revendication 4, caractérisé en ce que production du paramètre H dans la première étape comprend les étapes suivantes:

H1 - chargement du modulo N dans un premier registre (12) de n bits, avec n = m * k, et initialisation d'un deuxième registre (10) de n bits à zéro, le contenu du deuxième registre étant noté B(0),

H2 - décalage à droite, avec rebouclage sur son entrée, de l bits du premier registre, avec l le nombre de bits utiles du modulo,

H3 - production et stockage d'une donnée B(1) = 2 * (B(0) - N'), codée sur n bits, avec N' = N * $2^{n-l}$, par :

- décalage à droite dans les deux registres et soustraction bit à bit des contenus des premiers et deuxième registres, avec décalage à gauche de une unité du résultat, noté R(0), de la soustraction bit à bit,
- chargement du résultat de la soustraction après décalage, noté B(1), dans le deuxième registre,
- comparaison de B(1) et de N',

H4 - production d'une donnée $H_{int} = 2^V$ mod N', avec

$v = n - l + m' * k + (a + b - m') * k/2^r$, avec r un entier tel que $k/2^r$ soit entier, par :

mise en oeuvre d'une boucle indicée par un indice i, i entier de 1 à v, chaque $i^{ième}$ itération comprenant les opérations suivantes :

- si B(i) < N' alors chargement dans le deuxième registre de B(i+1) = 2 * B(i) après décalage à gauche de B(i) de une unité, et comparaison bit à bit de B(i+1) et N',
- sinon soustraction bit à bit de N' et B(i), avec décalage à gauche de une unité du résultat et chargement dans le deuxième registre de B(i+1) = 2 * (B(i) - N'), et comparaison bit à bit de B(i+1) et de N',

H5 - si B(v+1) ≥ N' : soustraction bit à bit de B(v+1) et N', et chargement dans le deuxième registre de B(v+1) - N',

H6 - décalage à droite de n - l bits dans les premier et deuxième registres,

H7 - production du paramètre H par la mise en oeuvre de r opérations $P_{field}$ :

$H_{int}$ (j) = P($H_{int}$ (j -1), $H_{int}$ (j-1)) $_N$ avec j indice de 1 à r, et $H_{int}$(0) = B(v+1) * $2^{l-n}$ ou (B(v+1) - N') * $2^{l-n}$.

6. Procédé selon la revendication 2, caractérisé en ce que, B étant inférieur ou égal à N :

- on produit H = $2^{(a+m')*k}$ mod N,
- on produit une donnée intermédiaire P(A, B)$_N$ codée sur m mots de k bits en fournissant m mots, correspondants à B codé sur m mots de k bits, et les a mots de A respectivement à l'entrée série et à l'entrée parallèle du circuit de multiplication, et

- on produit A * B mod N en fournissant les m mots de la donnée intermédiaire et les m' mots de poids faible de H respectivement à l'entrée série et à l'entrée parallèle du circuit de multiplication.

7. Procédé selon la revendication 6, caractérisé en ce qu'il comprend les étapes suivantes :

P1 - production du paramètre de correction d'erreur H et d'un paramètre $J_0$ codé sur k bits, et stockage de $J_0$ dans un registre (17) de k bits,

P2 - chargement du multiplieur B et du modulo N dans des premier et deuxième registres respectifs (10, 12) de n bits, avec n = m * k, et initialisation d'un troisième registre (11) de n bits à zéro, le contenu de ce troisième registre étant noté S,

P3 - mise en oeuvre d'une boucle, indicée par i, avec i variant de 1 à a, chaque $i^{ième}$ itération comprenant les opérations suivantes :

a) transfert du $i^{ième}$ mot $A_{i-1}$ du multiplicande A d'un quatrième registre (16) vers une bascule de mémorisation (21),

b) production d'une valeur X(i) = S(i-1) + B * $A_{i-1}$ avec S(0) = 0 et S(i-1) la valeur dite actualisée de S, définie ci-après, en :

I - décalant à droite le contenu du premier registre (10) vers l'entrée d'un premier circuit de multiplication (19) série-parallèle, avec rebouclage de la sortie du premier registre (10) sur son entrée,

II - multipliant les bits de B par $A_{i-1}$,

III - décalant à droite le contenu du deuxième registre (12), avec rebouclage de la sortie du registre sur son entrée,

IV - déterminant la valeur actualisée de S(i-1) comme étant la valeur stockée dans le troisième registre (11) après la $(1-1)^{ième}$ itération, si celle ci est inférieure à N, et si elle est plus grande, en soustrayant en série N de celle-ci, la valeur en résultant étant la valeur actualisée de S(i-1), et

V - décalant à droite le contenu du troisième registre (11) et additionnant bit à bit la valeur de la multiplication B * $A_{i-1}$ avec la valeur actualisée de S(i-1),

c) multiplication du mot le moins significatif de X(i), $X_0$(1), par $J_0$, et entrée de la valeur

$X_0(i) * J_0 \bmod 2^k = Y_0(i)$ dans un registre (18), et simultanément retarder N et X(i) de k cycles,

d) calcul d'une valeur $Z(i) = X(i) + Y_0(i) * N$ en :

I - multipliant $Y_0(i)$ par N, retardé de k cycles, et

II - additionnant X(i) à la valeur $Y_0(i) * N$,

e) ne pas prendre en compte le mot le moins significatif de Z(i) et stocker les mots restants, c'est à dire $Z(i)/2^k$, dans le troisième registre (11),

f) comparer $Z(i)/2^k$ à N, bit à bit, dans le but de déterminer la valeur actualisée S(i) de l'itération suivante, de la manière décrite ci-dessus,

g) le $i^{ieme}$ mot du multiplicande A étant chargé dans le quatrième registre (16) à un instant quelconque pendant les opérations ci-dessus;

P4 - à la $a^{ième}$ itération, ignorer le mot le moins significatif de Z(a) et entrer les mots restants, dans le premier registre (10),

P5 - répéter les étapes P3 et P4, dans lesquelles :

- on substitue H à A, et on fournit $Z(a)/2^k$ ou $(Z(a)/2^k) - N$, au premier circuit de multiplication (19),
- on a i variant de 1 à b.

P6 - sortie du résultat stocké dans le premier registre (10) à la dernière itération, éventuellement soustrait de N si nécessaire.

**8.** Procédé selon la revendication 7, caractérisé en ce que production du paramètre H dans la première étape comprend les étapes suivantes:

H1 - chargement du modulo N dans un premier registre (12) de n bits, avec n = m * k, et initialisation d'un deuxième registre (10) de n bits à zéro, le contenu du deuxième registre étant noté B(0),

H2 - décalage à droite, avec rebouclage sur son entrée, de 1 bits du premier registre, avec 1 le nombre de bits utiles du modulo,

H3 - production et stockage d'une donnée B(1) = 2 * (B(0) - N'), codée sur n bits, avec $N' = N * 2^{n-l}$, par :

- décalage à droite dans les deux registres et soustraction bit à bit des contenus des premier et deuxième registres, avec décalage à gauche de une unité du résultat, noté R(0), de la soustraction bit à bit,

- chargement du résultat de la soustraction après décalage, noté B (1) = 2 * R(0), dans le deuxième registre,
- comparaison de B(1) et de N',

H4 - production d'une donnée $H_{int} = 2^v \bmod N'$, avec

$v = n - l + m' * k + a * k/2^r$, avec r un entier tel que $k/2^r$ soit entier, par :

mise en oeuvre d'une boucle indicée par un indice i, i entier de 1 à v, chaque $i^{ième}$ itération comprenant les opérations suivantes :

- si B(i) < N' alors chargement dans le deuxième registre de B(i+1) = 2 * B(i) après décalage à gauche de B(i) de une unité, et comparaison bit à bit de B(i+1) et N',
- sinon soustraction bit à bit de N' et B(i), avec décalage à gauche de une unité du résultat et chargement dans le deuxième registre de B(i+1) = 2 * (B(i) - N'), et comparaison bit à bit de B(i+1) et de N',

H5 - si B(v+1) ≥ N' : soustraction bit à bit de B (v+1) et N', et chargement dans le deuxième registre de B(v+1) - N',

H6 - décalage à droite de n - l bits dans les premier et deuxième registres,

H7 - production du paramètre H par la mise en oeuvre de r opérations $P_{field}$ :

$H_{int}(j) = P(H_{int}(j-1), H_{int}(j-1))_N$ avec j indice de 1 à r, et $H_{int}(0) = B(v+1) * 2^{l-n}$ ou $(B(v+1) - N') * 2^{l-n}$.

**9.** Procédé selon la revendication 1, caractérisé en ce qu'on compare (a + b) et m', et,

- si a + b < m' alors on produit A * B mod N en fournissant m mots, correspondants à $B * 2^{a*k}$ codé sur m mots, et les a mots de A respectivement à l'entrée série et à l'entrée parallèle du circuit de multiplication,
- si a + b = m' alors

on compare $B * 2^{a*k}$ et N, et

- si $B * 2^{a*k} < N$, on produit A * B mod N en fournissant m mots, correspondants à $B * 2^{a*k}$ codé sur m mots, et les a mots de A respectivement à l'entrée série et à l'entrée parallèle du circuit de multiplication,
- sinon, on produit A * B mod N en fournissant m mots, correspondants à $B * 2^{a*k} \bmod N$ codé sur m mots, et les a mots de A respectivement à l'entrée série et à l'entrée parallèle du circuit de multiplication.

10. Procédé selon la revendication 1, caractérisé en ce qu'il comprend une étape lors de laquelle on produit un paramètre de correction d'erreur $H = 2^{p*k} \bmod N'$, codé sur m mots de k bits, avec N' une donnée binaire telle que $N = N' * 2^g$ et N' a un bit de poids le plus faible à 1.

11. Procédé selon la revendication 10, caractérisé en ce que :

- on produit $H = 2^{(a+b)*k-g} \bmod N'$,
- on produit une donnée intermédiaire $P(A, H)_{N'}$, codée sur n bits, en fournissant les m mots de H codé et les a mots de A respectivement à l'entrée série et à l'entrée parallèle du circuit de multiplication, et
- on produit $P(B, P(A, H)_{N'})_{N'}$ en fournissant les m mots de la donnée intermédiaire et les b mots de B respectivement à l'entrée série et à l'entrée parallèle du circuit de multiplication,
- on produit $A * B \bmod N$ par décalage de $P(B, P(A, H)_{N'})_{N'}$.

12. procédé selon la revendication 11, caractérisé en ce que la production du paramètre H comprend les étapes suivantes :

H1 - chargement du modulo N' dans un premier registre (12), et initialisation d'un deuxième registre (10) de n bits à zéro, le contenu du deuxième registre étant noté B(0),

H2 - décalage à droite du contenu du premier registre, avec rebouclage de sa sortie sur son entrée, de l - g bits, avec l le nombre de bits utiles de N,

H3 - production et stockage d'une donnée B(1) = 2 * (B(0) - N"), codée sur n bits, avec $N" = N' * 2^{n-l+g}$, par:

- décalage à droite dans les premier et deuxième registres (10, 12) du contenu de ces registres,
- soustraction bit à bit, au fur et à mesure de leur sortie, des contenus des dits deux registres, avec décalage à gauche de une unité du résultat, noté R(0), de la soustraction,
- chargement du résultat de la soustraction après décalage, noté B(1), dans le deuxième registre (10),
- comparaison de B(1) et de N",

H4 - production d'une donnée $H_{int} = 2^V \bmod N"$, avec

$v = n - l + m' * k + (a + b - m') * k/2^r$, avec r un entier tel que $k/2^r$ soit entier, par :

mise en oeuvre d'une boucle indicée par un indice i, i entier de 1 à v, chaque $i^{ième}$ itération comprenant les opérations suivantes :

- si $B(i) < N"$ alors chargement dans le deuxième registre de $B(i+1) = 2 * B(i)$ après décalage à gauche de B(i) de une unité, et comparaison bit à bit de B(i+1) et de N",
- sinon soustraction bit à bit de N" et B(i), avec décalage à gauche de une unité du résultat et chargement dans le deuxième registre de $B(i+1) = 2 * (B(i) - N")$, et comparaison bit à bit de B(i+1) et de N",

H5 - si $B(v+1) \geq N"$ : soustraction bit à bit de B(v+1) et N", et chargement dans le deuxième registre de B(v+1) - N",

H6 - décalage à droite de n - l bits dans les premier et deuxième registres,

H7 - mise en oeuvre de r opérations $P_{field}$ :
$H_{int}(j) = P(H_{int}(j-1), H_{int}(j-1))_{N'}$ avec j indice de 1 à r, et $H_{int}(0) = B(v+1) * 2^{l-n}$ ou $(B(v+1) - N") * 2^{l-n}$,

H8 - décalage à gauche de g bits de $H_{int}(r)$.

13. Procédé selon la revendication 11, caractérisé en ce que, B étant inférieur ou égal à N' :

- on produit $H = 2^{(a+m")*k-g} \bmod N'$, avec m" la taille utile en mots de N',
- on produit une donnée intermédiaire $P(A, B)_{N'}$, codée sur n bits, en fournissant m mots, correspondants à B codé sur m mots, et les a mots de A respectivement à l'entrée série et à l'entrée parallèle du circuit de multiplication, et
- on produit $P(H, P(A, B)_{N'})_{N'}$ en fournissant les m mots de la donnée intermédiaire et les m" mots de H respectivement à l'entrée série et à l'entrée parallèle du circuit de multiplication, et
- on produit $A * B \bmod N$ par décalage de $P(H, P(A, B)_{N'})_{N'}$.

14. Procédé selon la revendication 10, caractérisé en ce qu'on compare (a + b) et m", avec m" la taille utile en mots de N', et,

- si $a + b < m"$, alors on produit $A * B * 2^{-g} \bmod N'$ en fournissant m mots, correspondants à $B * 2^{a*k-g}$ codé sur m mots, et les a mots de A respectivement à l'entrée série et à l'entrée parallèle du circuit de multiplication,
- si $a + b = m"$ alors

on compare $B * 2^{a*k-g}$ et N', et

- si $B * 2^{a*k-g} < N'$, on produit $A * B * 2^{-g} \bmod N'$ en fournissant m mots, correspondants à $B * 2^{a*k-g}$ codé sur m mots, et les a mots de A respectivement à l'entrée série et à l'entrée parallèle du circuit de multiplication,

- sinon, on produit A * B * 2$^{-g}$ mod N' en fournissant m mots, correspondants à B * 2$^{a*k-g}$ mod N' codé sur m mots, et les a mots de A respectivement à l'entrée série et à l'entrée parallèle du circuit de multiplication,
- on produit A * B mod N par décalage de la donnée produite suite à la comparaison.

15. Procédé selon l'une des revendications 1 à 14, caractérisé en ce que m est variable.

**Patentansprüche**

1. Verfahren zum Durchführen einer modularen Multiplikation nach dem Montgomery-Verfahren, bei welchem ein Multiplikand A und ein Multiplikator B jeweils in a bzw. Worten à k Bit kodiert sind, wobei die Worte mit dem höchsten Gewicht von A und B nicht Null sind, ein Modulo N kodiert ist in m Worte à k Bit, das Modul (m - m') Worte mit dem höchsten Gewicht à k Bit mit dem Wert Null hat, wobei 0 < m' ≤ m, umfassend Multiplikationsschritte in einem Multiplikatorschaltkreis (19) mit einem seriellen Eingang, um kodierte Daten zu empfangen, die in wenigstens m' Worten à k Bit kodiert sind, einem parallelen Eingang zum Empfangen von Worten, die in k Bit kodiert sind, und mit einem seriellen Ausgang, dadurch gekennzeichnet, daß man sukzessive beim Durchführen der Multiplikation eine vorgegebene Anzahl p von Worten am Paralleleingang des Multiplikatorschaltkreises anlegt, wobei p unabhängig von m ist und größer oder gleich der Zahl a ist.

2. Verfahren nach Anspruch 1, dadurch gekennzeichnet, daß es einen Schritt umfaßt, bei dem man einen Fehlerkorrekturparameter H = 2$^{p \cdot k}$ mod N in m Worten à k Bit kodiert erzeugt.

3. Verfahren nach Anspruch 2, dadurch gekennzeichnet, daß:

- H = 2$^{(a+b) \cdot k}$ mod N erzeugt wird,
- ein Zwischendatensatz P(A, H)$_N$ erzeugt wird, der kodiert ist in m Worten à k Bit, indem die m Worte von H und die a Worte von A jeweils am seriellen Eingang und am parallelen Eingang des Multiplikatorschaltkreises angelegt werden, und
- A · B mod N erzeugt wird, indem die m Worte des Zwischendatensatzes und die b Worte von B jeweils am seriellen Eingang und am parallelen Eingang des Multiplikatorschaltkreises angelegt werden.

4. Verfahren nach Anspruch 3, dadurch gekennzeichnet, daß es folgende Schritte aufweist:

P1 Erzeugung des Fehlerkorrekturparameters H und eines Parameters J$_0$, der kodiert ist in k Bit, und Abspeichern von J$_0$ in einem Register (17) mit k Bit,
P2 Ablegen des Parameters H und von Modulo N in den jeweiligen ersten und zweiten Registern (10, 12) mit n Bit, wobei n = m · k, und Initialisieren eines dritten Registers (11) von n Bit auf Null, wobei der Inhalt dieses dritten Registers mit S bezeichnet wird,
P3 Durchführen einer Schleife, die mit i indiziert ist, wobei i eine Variable zwischen 1 und a ist, wobei jede i-te Iteration die folgenden Operationen umfaßt:

a) Übertragung des i-ten Wortes A$_{i-1}$ des Multiplikanden A eines vierten Registers (16) an eine Speicherkippstufe (21),
b) Erzeugung eines Wertes X(i) = S(i-1) + H - A$_{i-1}$ mit S(0) = 0 und S(i-1) gleich dem aktualisiert genannten Wert S, der wie nachfolgend definiert ist:

I Verschieben nach rechts des Inhalts des ersten Registers (10) zum Eingang eines ersten seriell-parallelen Multiplikatorschaltkreises (19) mit Rückschleifen des Ausgangs des ersten Registers (10) an seinen Eingang,
II Multiplizieren der Bits von H mit A$_{i-1}$,
III Verschieben nach rechts des Inhalts des zweiten Registers (12) mit Rückschleifung des Ausgangs des Registers an seinen Eingang,
IV Bestimmen des aktualisierten Wertes von S(i-1) als Wert, der in dem dritten Register (11) nach der (i-1)-ten Iteration abgelegt wurde, wenn dieser kleiner als N ist, und durch serielles Subtrahieren von N von diesem, wenn der Wert größer ist, wobei der Ergebniswert der aktualisierte Wert von S(i-1) ist, und
V Verschieben nach rechts des Inhalts des dritten Registers (11) und Addieren des Wertes der Multiplikation H · A$_{i-1}$ Bit für Bit zu dem aktualisierten Wert von S(i-1),

c) Multiplikation des Wortes mit dem geringsten Gewicht von X(i), X$_0$(i) mit J$_0$ und Eintragen des Wertes X$_0$(i) · J$_0$ mod 2$^k$ = Y$_0$(i) in ein Register (18) und gleichzeitiges Verzögern von N und X(i) um k Zyklen,

d) Berechnen eines Wertes $Z(i) = X(i) + Y_0(i) \cdot N$ durch:

I Multiplizieren von $Y_0(i)$ mit N, verzögert um k Zyklen, und
II Addieren von X(i) zu dem Wert $Y_0(i) \cdot N$,

e) Vernachlässigen des Wortes mit dem geringsten Gewicht von Z(i) und Abspeichern der übrigen Worte, d.h. $Z(i)/2^k$ in dem dritten Register (11),
f) Vergleichen von $Z(i)/2^k$ Bit für Bit mit N, um den aktualisierten Wert S(i) der folgenden Iteration auf die oben beschriebene Art zu bestimmen,
g) wobei das i-te Wort des Multiplikanden A in dem vierten Register (16) zu irgendeinem Zeitpunkt während der obengenannten Operationen abgelegt worden ist;

P4 bei der a-ten Iteration Ignorieren des Wortes mit dem geringsten Gewicht von Z(a) und Eintragen der restlichen Worte in dem ersten Register (10),
P5 Wiederholen der Schritte P3 und P4, bei welchen :

- A durch B ersetzt wird und $Z(a)/2^k$ oder $(Z(a)/2^k) - N$ an den ersten Multiplikatorschaltkreis (19) ausgegeben wird,

- i zwischen 1 und b variiert wird,

P6 Ausgeben des in dem ersten Register (10) gespeicherten Ergebnisses für die letzte Iteration, eventuell nach Abzug von N, falls nötig.

5. Verfahren nach Anspruch 4, dadurch gekennzeichnet, daß das Erzeugen des Parameters H in dem ersten Schritt die folgenden Schritte umfaßt:

H1 Ablegen von Modulo N in einem ersten Register (12) mit n Bit, wobei $n = m \cdot k$, und Initialisieren eines zweiten Registers (10) von n Bit auf Null, wobei der Inhalt des zweiten Registers B(0) genannt wird,
H2 Verschieben nach rechts mit Rückschleifung an seinen Eingang von 1 Bit des ersten Registers, wobei 1 die Zahl der für die Moduloberechnung genutzten Bits ist,
H3 Erzeugung und Abspeichern eines Datenwertes $(B(1) = 2 \cdot (B(0) - N'))$, kodiert in n Bit mit $N' = N \cdot 2^{n-1}$, durch:

- Verschieben nach rechts in den zwei Registern und Subtraktion Bit für Bit der Inhalte der ersten und zweiten Register mit Verschieben des Resultats der Bit-für-Bit-Subtraktion, genannt R(0), um eine Einheit nach links,
- Ablegen des Resultats der Subtraktion nach Verschieben, genannt B(1), in dem zweiten Register,
- Vergleichen von B(1) und N',

H4 Erzeugen eines Datenwertes $H_{int} = 2^v$ mod N' mit $v = n - l + m' \cdot k + (a + b - m') \cdot k/2^r$ mit r als ganzer Zahl, so daß auch $k/2^r$ eine ganze Zahl ist, durch:

Durchführen einer mit i indizierten Schleife, wobei i eine ganze Zahl zwischen 1 und v ist, wobei jede i-te Iteration die folgenden Operationen umfaßt :

- wenn B(i) < N', dann Ablegen von
$B(i+1) = 2 \cdot B(i)$ in dem zweiten Register nach Verschieben nach links von B(i) um eine Einheit und Bit-für-Bit-Vergleich von B(i+1) und N',
- andernfalls Bit-für-Bit-Subtraktion von N' und
B(i) mit Verschieben nach links um eine Einheit des Ergebnisses und Ablegen in dem zweiten Register von $B(i+1) = 2 \cdot (B(i) - N')$ und Bit-für-Bit-Vergleich von B(i+1) und N',

H5 wenn $B(v+1) \geq N'$: Bit-für-Bit-Subtraktion von B(v+1) und N' und Ablegen von B(v+1) - N' in dem zweiten Register,
H6 Verschieben nach rechts um n - l Bit in dem ersten und zweiten Register,
H7 Erzeugen des Parameters H durch Durchführen von r $P_{field}$-Operationen:
$H_{int}(j) = P (H_{int}(j-1), H_{int}(j-1))_N$ mit j Index zwischen 1 und r und $H_{int}(0) = B(v+1) - 2^{l-n}$ oder $(B(v+1) - N') \cdot 2^{l-n}$.

6. Verfahren nach Anspruch 2, dadurch gekennzeichnet, daß B kleiner oder gleich N ist:

- $H = 2^{(a+m') \cdot k}$ mod N erzeugt wird,
- ein Zwischendatensatz $P(A, B)_N$ erzeugt wird, der in m Worte à k Bit kodiert ist, indem m Worte, die B in m Worten à k Bit entsprechen, und die a Worte von A jeweils am seriellen Eingang und am parallelen Eingang des Multiplikatorschaltkreises angelegt werden, und
- A · B mod N erzeugt wird, indem die m Worte des Zwischendatensatzes und die m' Worte mit dem geringsten Gewicht von H - jeweils am seriellen Eingang und am parallelen Eingang des Multiplikatorschaltkreises angelegt werden.

7. Verfahren nach Anspruch 6, dadurch gekennzeichnet, daß es die folgenden Schritte umfaßt:

P1 Erzeugung des Fehlerkorrekturparameters H und eines Parameters $J_0$, kodiert in k Bit, und Abspeichern von $J_0$ in einem Register (17) à k Bit,

P2 Laden des Multiplikators B und von Modulo N in dem jeweiligen ersten und zweiten Register (10, 12) mit n Bit, wobei n = m · k, und Initialisieren eines dritten Registers (11) mit n Bit auf Null, wobei der Inhalt dieses dritten Registers S genannt wird,

P3 Durchführen einer mit i indizierten Schleife, wobei i zwischen 1 und a liegt und jede i-te Iteration die folgenden Operationen umfaßt:

a) Übertragung des i-ten Wortes $A_{i-1}$ des Multiplikanden A von einem vierten Register (16) an eine Speicherkippstufe (21),

b) Erzeugen eines Wertes $X(i) = S(i-1) + B A_{i-1}$ mit $S(0) = 0$ und $S(i-1)$, dem aktualisiert genannten Wert von S, der im folgenden definiert wird, indem:

I Verschieben nach rechts des Inhalts des ersten Registers (10) zum Eingang eines ersten seriell-parallelen Multiplikatorschaltkreises (19) mit Rückschleifen des Ausgangs des ersten Registers (10) an seinen Eingang,

II Multiplizieren der Bits von B mit $A_{i-1}$,

III Verschieben nach rechts des Inhalts des zweiten Registers (12) mit Rückschleifung des Ausgangs des Registers an seinen Eingang,

IV Bestimmen des aktualisierten Wertes von S(i-1) als Wert, der in dem dritten Register (11) nach der (i-1)-ten Iteration abgelegt wurde, wenn dieser kleiner als N ist, und durch serielles Subtrahieren von N von diesem, wenn der Wert größer ist, wobei der Ergebniswert der aktualisierte Wert von s(i-1) ist, und

V Verschieben nach rechts des Inhalts des dritten Registers (11) und Addieren des Wertes der Multiplikation $B \cdot A_{i-1}$ Bit für Bit zu dem aktualisierten Wert von S (i-1)

c) Multiplikation des Wortes mit dem geringsten Gewicht von X(i), $X_0(i)$ mit $J_0$ und Eintragen des Wertes $X_0(i) \cdot J_0 \bmod 2^k = Y_0(i)$ in ein Register (18) und gleichzeitiges Verzögern von N und X(i) um k Zyklen,

d) Berechnen eines Wertes $Z(i) = X(i) + Y_0(1) \cdot N$ durch:

I Multiplizieren von $Y_0(i)$ mit N, verzögert um k Zyklen, und
II Addieren von X(i) zu dem Wert $Y_0(1) \cdot N$,

e) Vernachlässigen des Wortes mit dem geringsten Gewicht von Z(i) und Abspeichern der übrigen Worte, d.h. $Z(i)/2^k$ in dem dritten Register (11),

f) Vergleichen von $Z(i)/2^k$ Bit für Bit mit N, um den aktualisierten Wert S(i) der folgenden Iteration auf die oben beschriebene Art zu bestimmen,

g) wobei das i-te Wort des Multiplikanden A abgelegt worden ist in dem vierten Register (16) zu irgendeinem Zeitpunkt während der obengenannten Operationen;

P4 bei der a-ten Iteration Ignorieren des Wortes mit dem geringsten Gewicht von Z(a) und Eintragen der restlichen Worte in dem ersten Register (10),

P5 Wiederholen der Schritte P3 und P4, bei welchen:

- A durch H ersetzt wird und $Z(a)/2^k$ oder $(Z(a)/2^k) - N$ an den ersten Multiplikatorschaltkreis (19) ausgegeben wird,
- i zwischen 1 und b variiert wird,

P6 Ausgeben des in dem ersten Register (10) gespeicherten Ergebnisses für die letzte Iteration, eventuell nach Abzug von N, falls nötig.

8. Verfahren nach Anspruch 7, dadurch gekennzeichnet, daß das Erzeugen des Parameters H in dem ersten Schritt die folgenden Schritte umfaßt:

H1 Ablegen von Modulo N in einem ersten Register (12) mit n Bit, wobei n = m · k, und Initialisieren eines zweiten Registers (10) von n Bit auf Null, wobei der Inhalt des zweiten Registers B(0) genannt wird,

H2 Verschieben nach rechts mit Rückschleifung an seinen Eingang von 1 Bit des ersten Registers, wobei 1 die Zahl der für die Moduloberechnung genutzten Bits ist,

H3 Erzeugung und Abspeichern eines Datenwertes $(B(1) = 2 \cdot (B(0) - N'))$, kodiert in n Bit mit $N' = N \cdot 2^{n-1}$, durch:

- Verschieben nach rechts in den zwei Registern und Subtraktion Bit für Bit der Inhalte der ersten und zweiten Register mit Verschieben des Resultats der Bit-für-Bit-Subtraktion, genannt R(0), um eine Einheit nach links,
- Ablegen des Resultats der Subtraktion nach Verschieben, genannt B(1) = 2 · R(0) in dem zweiten Register,
- Vergleichen von B(1) und N',

H4 Erzeugen eines Datenwertes $H_{int}$ = $2^v$ mod N' mit v = n - l + m' · k + a · k/$2^r$ mit r als ganzer Zahl, so daß auch k/$2^r$ eine ganze Zahl ist, durch: Durchführen einer mit i indizierten Schleife, wobei i eine ganze Zahl zwischen 1 und v ist, wobei jede i-te Iteration die folgenden Operationen umfaßt:

- wenn B(i) < N', dann Ablegen von B(i+1) = 2 · B(i) in dem zweiten Register nach Verschieben nach links von B(i) um eine Einheit und Bit-für-Bit-Vergleich von B(i+1) und N',
- andernfalls Bit-für-Bit-Subtraktion von N' und B(i) mit Verschieben nach links um eine Einheit des Ergebnisses und Ablegen in dem zweiten Register von B(i+1) = 2 · (B(i) - N') und Bit-für-Bit-Vergleich von B(i+1) und N',

H5 wenn B(v+1) ≥ N': Bit-für-Bit-Subtraktion von B(v+1) und N' und Ablegen von B(v+1) - N' in dem zweiten Register,
H6 Verschieben nach rechts um n - l Bit in dem ersten und zweiten Register,
H7 Erzeugen des Parameters H durch Durchführen von r $P_{field}$-Operationen:
$H_{int}(j)$ = P ($H_{int}(j-1)$, $H_{int}(j-1)$)$_N$ mit j Index zwischen 1 und r und $H_{int}(0)$ = B(v+1) · $2^{l-n}$ oder (B (v+1) - N') · $2^{l-n}$.

9. Verfahren nach Anspruch 1, dadurch gekennzeichnet, daß man (a + b) und m' vergleicht und

- wenn a + b < m' dann A · B mod N erzeugt wird, indem m Worte entsprechend B · $2^{a·k}$ kodiert in m Worte ausgegeben und die a Worte von A jeweils am seriellen Eingang und parallelen Eingang des Multiplikatorschaltkreises angelegt werden,
- wenn a + b = m', dann B · $2^{a·k}$ und N verglichen werden, und
- wenn B · $2^{a·k}$ < N, dann A · B mod N erzeugt wird, indem m Worte entsprechend B · $2^{a· k}$ kodiert in m Worte und die a Worte von A jeweils am seriellen Eingang und am parallelen Eingang des Multiplikatorschaltkreises angelegt werden,
- andernfalls A · B mod N erzeugt wird, indem m Worte entsprechend B · $2^{a· k}$ mod N kodiert in m Worte und die a Worte von A jeweils am seriellen Eingang und am parallelen Eingang des Multiplikatorschaltkreises angelegt werden.

10. Verfahren nach Anspruch 1, dadurch gekennzeichnet, daß es einen Schritt umfaßt, bei dem ein Fehlerkorrekturparameter H = $2^{p·k}$ mod N' erzeugt wird, kodiert in m Worte à k Bit mit N' einem binären Datenwert, so daß N = N' · $2^g$ und N' ein Bit mit dem geringsten Gewicht hat, das den Wert 1 hat.

11. Verfahren nach Anspruch 10, dadurch gekennzeichnet, daß

- H = $2^{(a+b)·k-g}$ mod N' erzeugt wird,
- ein Zwischendatensatz P(A, H)$_{N'}$ erzeugt wird, kodiert in n Bit, indem die m Worte von dem kodierten H - und die a Worte von A jeweils am seriellen Eingang und am parallelen Eingang des Multiplikatorschaltkreises angelegt werden, und
- P (B, P(A, H)$_{N'}$)$_{N'}$ erzeugt wird, indem die m Worte des Zwischendatensatzes und die b Worte von B jeweils am seriellen Eingang und am parallelen Eingang des Multiplikatorschaltkreises angelegt werden,
- A · B mod N durch Verschieben von P(B, P(A, H)$_{N'}$)$_{N'}$ erzeugt wird.

12. Verfahren nach Anspruch 11, dadurch gekennzeichnet, daß das Erzeugen von dem Parameter H die folgenden Schritte umfaßt:

H1 Ablegen von Modulo N' in einem ersten Register (12) und Initialisieren eines zweiten Registers (10) mit n Bit auf Null, wobei der Inhalt des zweiten Registers B(0) genannt wird,
H2 Verschieben nach rechts des Inhalts des ersten Registers mit Rückschleifen seines Ausgangs an seinen Eingang um l - g Bit, wobei l die Zahl der verwendeten Bits von N ist,
H3 Erzeugen und Abspeichern eines Datenwertes
   B(1) = 2 · (B(0) - N"), kodiert in n Bit, mit N" = N' · $2^{n-l+g}$, durch:

- Verschieben nach rechts in dem ersten und zweiten Register (10, 12) des Inhalts dieser Register,
- Subtraktion Bit für Bit je nach ihrem Ausgang der Inhalte der genannten zwei Register mit Verschieben nach rechts um eine Einheit des Resultats der Subtraktion, genannt R(0),
- Ablegen des Ergebnisses der Subtraktion nach Verschiebung, genannt B(1) in dem zweiten Register (10),
- Vergleichen von B(1) und N",

H4 Erzeugen eine Datenwertes $H_{int}$ = $2^v$ mod N" mit v = n - l + m' · k + (a + b - m') · k/$2^r$ mit r als ganzer Zahl, so daß k/$2^r$ eine ganze Zahl ist, durch:

Durchführen einer Schleife, die mit einem Index i indiziert ist, wobei i eine ganze Zahl zwischen 1 und v ist, wobei jede i-te Iteration die folgenden Operationen umfaßt:

- wenn B(i) < N", dann Ablegen von B(i+1) = 2 ·B(i) in dem zweiten Register nach Verschieben nach links von B(i) um eine Einheit und Bit-für-Bit-Vergleich von B(i+1) und N",
- andernfalls Bit-für-Bit-Subtraktion von N" und B(i) mit Verschieben nach links um eine Einheit des Ergebnisses und Ablegen in dem zweiten Register von B(i+1) = 2 · (B(i) - N") und Bit-für-Bit-Vergleich von B(i+1) und N",

H5 wenn B(v+1) ≥ N": Bit-für-Bit-Subtraktion von B(v+1) und N" und Ablegen von B(v+1) - N" in dem zweiten Register,
H6 Verschieben nach rechts um n - l Bit in dem ersten und zweiten Register,
H7 Erzeugen des Parameters H - durch Durchführen von r $P_{field}$-Operationen:

$H_{int}(j) = P(H_{int}(j-1), H_{int}(j-1)_{N'}$ mit j Index zwischen 1 und r und $H_{int}(0) = B(v+1) \cdot 2^{l-n}$ oder $(B(v+1) - N") \cdot 2^{l-n}$,
H8 Verschieben nach rechts von g Bit von $H_{int}$ (r).

13. Verfahren nach Anspruch 11, dadurch gekennzeichnet, daß für B kleiner oder gleich N':

- $H = 2^{(a+m")\cdot k - g}$ mod N' mit m" als benötigter Größe an Worten von N' erzeugt wird,
- ein Zwischendatensatz $P(A, B)_{N'}$ in n Bit kodiert erzeugt wird, indem m Worte entsprechend B, kodiert in m Worten, und die a Worte von A jeweils am seriellen Eingang und am parallelen Eingang des Multiplikatorschaltkreises angelegt werden, und
- $P(H, P(A, B)_{N'})_{N'}$ erzeugt wird, indem die m Worte des Zwischendatensatzes und die m" Worte von H jeweils am seriellen Eingang und am parallelen Eingang des Multiplikatorschaltkreises angelegt werden, und
- A · B mod N durch Verschieben von $P(H, P(A, B)_{N'})_{N'}$ erzeugt wird.

14. Verfahren nach Anspruch 10, dadurch gekennzeichnet, daß man (a + b) und m" mit m" als benötigter Größe in Worten von N' vergleicht und

- wenn a + b < m" dann A · B · $2^{-g}$ mod N' erzeugt wird, indem m Worte entsprechend B · $2^{a\cdot k - g}$, kodiert in m Worten, und die a Worte von A jeweils am seriellen Eingang und am parallelen Eingang des Multiplikatorschaltkreises angelegt werden,
- wenn a + b = m", dann B · $2^{a\cdot k - g}$ und N' verglichen wird, und
- wenn B · $2^{a\cdot k - g}$ < N', dann A · B · $2^{-g}$ mod N' erzeugt wird, indem m Worte entsprechend B · $2^{a\cdot k - g}$, kodiert in m Worte, und die a Worte von A jeweils am seriellen Eingang und am parallelen Eingang des Multiplikatorschaltkreises angelegt werden,
- andernfalls A · B · $2^{-g}$ mod N' erzeugt wird, indem m Worte entsprechend B · $2^{a\cdot k - g}$ mod N', kodiert in m Worte, und die a Worte von A jeweils am seriellen Eingang und am parallelen Eingang des Multiplikatorschaltkreises angelegt werden,
- A · B mod N durch Verschieben der Daten, die gemäß des Vergleichs erzeugt wurden, erzeugt wird.

15. Verfahren nach einem der Ansprüche 1 bis 14, dadurch gekennzeichnet, daß m eine Variable ist.

**Claims**

1. Method for implementing modular multiplication according to the Montgomery method, in which a multiplicand A and a multiplier B are coded in respectively a and b words of k bits, the most significant words of A and B being non-null, a modulo N is coded in m words of k bits, the modulo having (m-m') most significant null k-bit words, with 0 < m' ≤ m, comprising steps of multiplication in a multiplier circuit (19) having a serial input for receiving data coded in at least m' words of k bits, a parallel input for receiving coded words of k bits, and a serial output, characterised in that, when the multiplication is implemented, a predetermined number p of words are supplied successively at the parallel input of the multiplier circuit, p being independent of m and greater than or equal to the number a.

2. Method according to Claim 1, characterised in that it comprises a step during which there is produced an error correction parameter $H = 2^{p^{*}k}$ mod N coded in m words of k bits.

3. Method according to Claim 2, characterised in that:

- $H = 2^{(a+b)^{*}k}$ mod N is produced,

- an intermediate data item $P(A, H)_N$ coded in m words of k bits is produced by supplying the m words of H and the a words of A respectively at the serial input and at the parallel input of the multiplier circuit, and

- A * B mod N is produced by supplying the m words of the intermediate data item and the b words of B respectively at the serial input and at the parallel input of the multiplier circuit.

4. Method according to claim 3, characterised in that it 4. Method according to Claim 3, characterised in that it comprises the following steps:

P1 - producing the error correction parameter H and a parameter $J_0$ coded in k bits, and storing $J_0$ in a k-bit register (17),

P2 - loading the parameter H and the modulo N into first and second respective n-bit registers (10, 12), with n = m * k, and initialising a third n-bit register (11) to zero, the content of this third register being denoted S,

P3. - implementing a loop, indexed by i, with i varying from 1 to a, each $i^{th}$ iteration comprising the following operations :

a) transferring the $i^{th}$ word $A_{i-1}$ of the multiplicand A from a fourth register (16) to a storage flip-flop (21),

b) producing a value $X(i) = S(i-1) + H * A_{i-1}$ with S(0) = 0 and S(i-1) the so-called updated value of S, defined below, by:

I - shifting to the right the content of the first register (10) towards the input of a first serial/parallel multiplier circuit (19), with looping back of the output of the first register (10) onto its input,

II - multiplying the bits of H by $A_{i-1}$,

III - shifting to the right the content of the second register (12), with looping back of the output of the register onto its input,

IV - determining the updated value of S(i-1) as being the value stored in the third register (11) after the $(i-1)^{th}$ iteration, if this is less than N, and if it is greater, subtracting N serially therefrom, the value resulting therefrom being the updated value of s(i-1), and

V - shifting to the right the content of the third register (11) and adding bit by bit the value of the multiplication H * $A_{i-1}$ with the updated value of S(i-1),

c) multiplying the least significant word of

X(i), $X_0(i)$, by $J_0$, and inputting the $X_0(i) * J_0$ mod 2k = $Y_0(i)$ into a register (18) and simultaneously delaying N and X(i) by k cycles,

d) calculating a value $Z(i) = X(i) + Y_0(i) * N$ by :

I - multiplying $Y_0(i)$ by N, delayed by k cycles, and

II - adding X(i) to the value $Y_0(i) * N$,

e) not taking account of the least significant word of Z(i) and storing the remaining words, that is to say $Z(i)/2^k$, in the third register (11),

f) comparing $Z(i)/2^k$ with N, bit by bit, for the purpose of determining the updated value S (i) of the following iteration, as described above,

g) the $i^{th}$ word of the multiplicand A being loaded into the fourth register (16) at any moment during the above operations ;

P4 - at the $a^{th}$ iteration, ignoring the least significant word of Z(a) and entering the remaining words into the first register (10),

P5 repeating steps P3 and P4, in which:

- B is substituted for A, and $Z(a)/2^k$ or $(Z(a)/2^k)$ - N is supplied to the first multiplier circuit (19),

- i varies from 1 to b,

P6 - outputting the result stored in the first register (10) at the last iteration, possibly with N subtracted if necessary.

5. Method according to Claim 4, characterised in that production of the parameter H in the first step comprises the following steps :

H1 - loading the modulo N into a first n-bit register (12), with n = m * k, and initialising a second n-bit register (10) to zero, the content of the second register being denoted B(0),

H2 - shifting the first register to the right, with looping back onto its input, by l bits, with l the number of useful bits of the modulo,

H3 - producing and storing a data item $B(1) = 2 * (B(0) - N')$, coded in n bits, with $N' = N * 2^{n-l}$,

by:

- shifting to the right in the two registers and subtracting bit by bit the contents of the first and second registers, with shifting to the left, by one unit, of the result, denoted R(0), of the bit-by-bit subtraction,

- loading the result of the subtraction after shifting, denoted B(1), into the second register,

- comparing B (1) and N',

H4 - producing a data item $H_{int} = 2^v$ mod N', with $v = n - l + m' * k + (a + b - m') * k/2^r$, with r an integer such that $k/2^r$ is integer, by: implementing a loop indexed by an index i, i an integer from 1 to v, each $i^{th}$ iteration comprising the following operations:

- it B(i) < N' then loading B(i+1) = 2 * B(i) into the second register after shifting B(i) to the left by one unit, and comparing B(i+1) and N' bit by bit,

- otherwise subtracting N' and B(i) bit by bit, with shifting of the result to the left by one unit and loading of B(i+1) = 2 * (B(i) - N') into the second register, and comparing B (i+1) and N' bit by bit,

H5 - if B(V+1) ≥ N' : subtracting B(v+1) and N' bit by bit, and loading B(v+1) - N' into the second register,

H6 - shifting to the right by n - l bits in the first and second registers,

H7 - producing the parameter H by implementing r $P_{field}$ operations:
$H_{int}$ (j) = P($H_{int}$(j-1), $H_{int}$(j-1)$_N$ with j an index from 1 to r, and $H_{int}$(0) = B(v+1) * $2^{l-n}$ or (B(v+1) - N') * $2^{l-n}$.

6. Method according to Claim 2, characterised in that, B being less than or equal to N:

- H = $2^{(a+m')*k}$ mod N is produced,

- an intermediate data item P(A, B)$_N$ coded in m words of k bits is produced by supplying m words, corresponding to B coded in m words of k bits, and the a words of A respectively at the serial input and at the parallel input of the multiplier circuit, and

- A * B mod N is produced by supplying the m words of the intermediate data item and the m' least significant words of H respectively at the serial input and at the parallel input of the multiplier circuit.

7. Method according to Claim 6, characterised in that it comprises the following steps :

P1 - producing the error correction parameter H and a parameter $J_0$ coded in k bits, and storing $J_0$ in an k-bit register (17),

P2 - loading the multiplier B and the modulo N into first and second respective n-bit registers (10,12), with n = m * k, and initialising a third n-bit register (11) to zero, the content of this third register being denoted S,

P3 - implementing a loop, indexed by i, with i varying from 1 to a, each $i^{th}$ iteration comprising the following operations :

a) transferring the $i^{th}$ word $A_{i-1}$ of the multiplicand A from a fourth register (16) to a storage flip-flop (21),

b) producing a value X(i) = S(i-1) + B * $A_{i-1}$ with S(0) = 0 and S(i-1) the so-called updated value of S, defined below, by:

I - shifting to the right the content of the first register (10) towards the input of a first serial/parallel multiplier circuit (19), with looping back of the output of the first register (10) onto its input,

II - multiplying the bits of B by $A_{i-1}$,

III - shifting to the right the content of the second register (12), with looping back of the output of the register onto its input,

IV determining the updated value of S (i-1) as being the value stored in the third register (11) after the (i-1)$^{th}$ iteration, if this is less than N, and if it is greater, subtracting N serially therefrom, the value resulting therefrom being the updated value of S(i-1), and

V - shifting to the right the content of the third register (11) and adding bit by bit the value of the multiplication B * $A_{i-1}$ with the updated value of S(i-1),

c) multiplying the least significant word of $X_0$(i), X(i), by $J_0$, and inputting the value $X_0$

(i) * $J_0$ mod $2^k$ = $Y_0$(i) into a register (18), and simultaneously delaying N and X(i) by k cycles,

d) calculating a value Z(i) = X(i) + $Y_0$(i) * N by :

    I - multiplying $Y_0$(i) by N, delayed by k cycles, and

    II - adding X(i) to the value $Y_0$ (i) * N,

e) not taking account of the least significant word of Z(i) and storing the remaining words, that is to say Z(i)/$2^k$, in the third register (11),

f) comparing Z (i)/$2^k$ with N, bit by bit, for the purpose of determining the updated value S (i) of the following iteration, as described above,

g) the $i^{th}$ word of the multiplicand A being loaded into the fourth register (16) at any moment during the above operations;

P4 - at the $a^{th}$ iteration, ignoring the least significant word of z (a) and entering the remaining words into the first register (10),

P5 repeating steps P3 and P4, in which:

-   H is substituted for A, and Z(a)/$2^k$ or (Z(a) /$2^k$) - N is supplied to the first multiplier circuit (19),

-   i varies from 1 to b,

P6 - outputting the result stored in the first register (10) at the last iteration, possibly with N subtracted if necessary.

8. Method according to claim 7, characterised in that production of the parameter H in the first step comprises the following steps :

    H1 - loading the modulo N into a first n-bit register (12), with n = m * k, and initialising a second n-bit register (10) to zero, the content of the second register being denoted B(0),

    H2 - shifting the first register to the right, with looping back onto its input, by 1 bits, with 1 the number of useful bits of the modulo,

    H3 - producing and storing a data item B(1) = 2 * (B(0) - N'), coded in n bits, with N' = N * $2^{n-1}$, by:

-   shifting to the right in the two registers and subtracting bit by bit the contents of the first and second registers, with shifting to the left, by one unit, of the result, denoted R(0), of the bit-by-bit subtraction,

-   loading the result of the subtraction after shifting, denoted B(1) = 2 * R(0), into the second register,

-   comparing B(1) and N',

H4 - producing a data item $H_{int}$ = $2^v$ mod N', with v = n - l + m' * k + a * k/$2^r$, with r an integer such that k/$2^r$ is integer, by: implementing a loop indexed by an index i, i an integer from 1 to v, each $i^{th}$ iteration comprising the following operations:

-   if B(i) < N' then loading B(i+1) = 2 * B(i) into the second register after shifting B(i) to the left by one unit, and comparing B(i+1) and N' bit by bit,

-   otherwise subtracting N' and B(i) bit by bit, with shifting of the result to the left by one unit and loading of B(i+1) = 2 * (B(i) - N') into the second register, and comparing B (i+1) and N' bit by bit,

H5 - if B(v+1) $\geq$ N' : subtracting B(V+1) and N' bit by bit, and loading B(v+1) - N' into the second register,

H6 - shifting to the right by n - l bits in the first and second registers,

H7 - producing the parameter H by implementing r $P_{field}$ operations: $H_{int}$(j) = P($H_{int}$(j-1), $H_{int}$(j-1))$_N$ with j an index from 1 to r, and $H_{int}$ (0) = B(v+1) * $2^{l-n}$ or (B(v+1) - N') * $2^{l-n}$ .

9. Method according to Claim 1, characterised in that (a + b) and m' are compared, and,

-   if a + b < m', then A * B mod N is produced by supplying m words, corresponding to B * $2^{a*k}$ coded in m words, and the a words of A respectively at the serial input and at the parallel input of the multiplier circuit,

-   if a + b m', then B * $2^{a*k}$ and N are compared, and

-   if B * $2^{a*k}$ < N, then A * B mod N is produced by supplying m words, corresponding to B * $2^{a*k}$ coded in m words, and the a words of A respectively at the serial input and at the parallel input of the multiplier circuit,

- otherwise A * B mod N is produced by supplying m words, corresponding to B * $2^{a*k}$ mod N coded in m words, and the a words of A respectively at the serial input and at the parallel input of the multiplier circuit.

10. Method according to Claim 1, characterised in that it comprises a step during which there is produced an error correction parameter H = $2^{p*k}$ mod N', coded in m words of k bits, with N' a binary data item such that N = N' * $2^g$ and N' has a least significant bit at 1.

11. Method according to Claim 10, characterised in that :

   H = $2^{(a+b)*k-g}$ mod N' is produced,

- an intermediate data item P(A, H)$_{N'}$ is produced, coded in n bits, by supplying the m words of coded H and the a words of A respectively at the serial input and at the parallel input of the multiplier circuit, and

- P(B, P(A, H)$_{N'}$)$_{N'}$ is produced by supplying the m words of the intermediate data item and the b words of B respectively at the serial input and at the parallel input of the multiplier circuit,

- A * B mod N is produced by shifting P(B, P(A, H)$_{N'}$)$_{N'}$.

12. Method according to Claim 11, characterised in that production of the parameter H comprises the following steps:

   H1 - loading the modulo N' into a first register (12), and initialising a second n-bit register (10) to zero, the content of the second register being denoted B(0)

   H2 - shifting to the right the content of the first register, with looping back of its output onto its input, by l - g bits, with l the number of useful bits of N,

   H3 - production and storage of a data item B(1) = 2 * (B(0)-N"), coded in n bits, with N" = N' * $2^{n-l+g}$ by:

   - shifting to the right, in the first and second registers (10, 12), the content of these registers,

   - subtracting bit by bit, as they are output, the contents of the said two registers, with shifting of the result, denoted R (0), of the subtraction, to the left by one unit,

- loading the result of the subtraction after shifting, denoted B (1), into the second register (10),

- comparing B(1) and N",

H4 - producing a data item H$_{int}$ = $2^v$ mod N", with v = n - l + m' * k + (a + b - m') * k/$2^r$, with r an integer such that k/$2^r$ is integer, by: implementing a loop indexed by an index i, i an integer from 1 to v, each i$^{th}$ iteration comprising the following operations:

- if B(i) < N" then loading B(i+1) = 2 * B(i) into the second register after shifting B(i) to the left by one unit, and comparing B(i+1) and N" bit by bit,

- otherwise subtracting N" and B(i) bit by bit, with shifting of the result to the left by one unit and loading of B(i+1) = 2 * (B(i) - N") into the second register, and comparing B(i+1) and N" bit by bit,

H5 - if B(v+1) ≥ N": subtracting B(v+1) and N" bit by bit, and loading B(v+1) - N" into the second register,

H6 shifting to the right by n - l bits in the first and second registers,

H7 - implementing r P$_{field}$ operations:
H$_{int}$(j) = P(H$_{int}$(j-1), H$_{int}$(j-1))$_{N'}$ with j an index from 1 to r, and H$_{int}$(0) = B(v+1) * $2^{l-n}$ or (B(v+1) - N") * $2^{l-n}$.

H8 - shifting of H$_{int}$ (r) to the left by g bits.

13. Method according to Claim 11, characterised in that, B being less than or equal to N' :

- H = $2^{(a+m")*k-g}$ mod N' is produced, with m" the useful size in words of N',

- an intermediate data Item P(A, B)$_{N'}$ is produced, coded in n bits, by supplying m words, corresponding to B coded in m words, and the a words of A respectively at the serial input and at the parallel input of the multiplier circuit, and

- P(H, P(A, B)$_{N'}$)$_{N'}$ is produced by supplying the m words of the intermediate data item and the m" words of H respectively at the serial input and at the parallel input of the multiplier circuit, and

- A * B mod N is produced by shifting $P(H, P(A, B)_{N'})_{N'}$.

14. Method according to Claim 10, characterised in that $(a + b)$ and m" are compared, with m" the useful size in words of N', and,

- if $a + b < m$", then $A * B * 2^{-g} \bmod N'$ is produced by supplying m words, corresponding to $B * 2^{a*k-g}$ coded in m words, and the a words of A respectively at the serial input and at the parallel input of the multiplier circuit,

- if $a + b = m$", then
  $B * 2^{a*k-g}$ and N' are compared, and

- if $B * 2^{a*k-g} < N'$, then $A * B * 2^{-g} \bmod N'$ is produced by supplying m words, corresponding to $B * 2^{a*k-g}$ coded in m words, and the a words of A respectively at the serial input and at the palallel input of the multiplier circuit,

- otherwise $A * B * 2^{-g} \bmod N'$ is produced by supplying m words, correspongding to $B * 2^{a*k-g} \bmod N'$ coded in m words, and the a words of A respectively at the serial input and at the parallel input of the multiplier circuit,

- A * B mod N is produced by shifting the data item produced following the comparison.

15. Method according to one of Claims 1 to 14, characterised in that m is variable.

FIG_1

# FIG_2